# EUROPEAN PATENT SPECIFICATION

(11) **EP 4 621 519 B1**
(45) Date of publication and mention of the grant of the patent: **16.09.2026**
(21) Application number: 25165366.3
(22) Date of filing: 21.03.2025
(51) Int. Cl.: G05D 1/617, G05D 1/693

(54) **UNSUPERVISED ON-ROAD TRANSPORT OF AN AUTONOMOUS, OFF-ROAD AGRICULTURAL MACHINE**
UNBEAUFSICHTIGTER STRASSENVERKEHR EINER AUTONOMEN GELÄNDEWIRTSCHAFTLICHEN MASCHINE
TRANSPORT SUR ROUTE NON SUPERVISÉ D'UNE MACHINE AGRICOLE AUTONOME TOUT-TERRAIN

(30) Priority: 21.03.2024 US 202463568147 P; 28.02.2025 US 202563765129 P; 14.03.2025 US 202519080189
(43) Date of publication of application: 24.09.2025
(73) Proprietor: Deere & Company, Moline, IL 61265 (US)
(72) Inventor: Johnson, Lee A, Polk City, Iowa (US); Harmon, Andrew W, Geneseo, Illinois (US)
(74) Representative: Reddie & Grose LLP

(56) References cited:
- DE-A1- 102022 105 616
- US-A1- 2019 244 524
- US-A1- 2023 418 292
- US-A1- 2024 004 384
- US-A1- 2024 016 076
- US-B2- 10 920 401

## Description

### FIELD OF THE DESCRIPTION

The present description relates to moving work machines. More specifically, the description emphasizes temporary traffic control systems that interact with work machines to facilitate coordinated movements of the work machines.

### BACKGROUND

Work machines, including agricultural, construction, forestry, mining, and road construction, are increasingly relied upon to perform tasks in diverse, complex, and often busy environments. Some work machines are autonomous or semi-autonomous, which almost always add additional complex considerations. As work machines move from one location to another, it often becomes important to carefully navigate varying traffic conditions, comply with local regulations, and/or ensure that there is appropriate space and accommodations for nearby vehicles and pedestrians.

US 2024/004384 relates to an autonomous travel system having a detection process unit that detects obstacles while a work vehicle is traveling on a road connecting fields. A travel processor causes the work vehicle to perform avoidance travel when the obstacles are registered as the avoidance travel target that is a subject to be avoided by the work vehicle's avoidance travel, while it causes the work vehicle not to perform the avoidance travel when the obstacles are registered as the non-avoidance travel target that is a subject not to be avoided by the work vehicle's avoidance travel.

The discussion above is merely provided for general background information and is not intended to be used as an aid in determining the scope of the claimed subject matter.

### SUMMARY

A method for controlling an autonomous work machine includes receiving from the autonomous work machine an indication of an intention for the autonomous work machine to travel on a road. An instruction is sent to a traffic control device that is a component of a temporary traffic control system. The instruction causes the traffic control device to initiate a signal change. An indication is provided to the autonomous work machine that the road is clear to cross from a first off-road work location to a second off-road work location.

### BRIEF DESCRIPTION OF THE DRAWINGS

FIG. 1 is a pictorial representation of a farming area in which a temporary traffic control system is deployed.
FIG. 2 is a pictorial representation of an on-road traffic control setup.
FIG. 3 is a schematic representation of an example of a deployment of an on-road traffic coordination controller.
FIG. 4 is a process flow diagram demonstrating an example of coordination between an autonomous harvester and at least one traffic control device.
FIG. 5 is a process flow diagram demonstrating an example of coordination between an autonomous work machine and at least one traffic control device.
FIG. 6 is a schematic diagram of an on-road traffic coordination controller deployed within a remote server architecture.
FIG. 7 is a simplified block diagram of one illustrative example of a handheld or mobile computing device.
FIG. 8 is a schematic representation of a tablet computer.
FIG. 9 is a schematic representation of a smartphone.
FIG. 10 is a schematic representation of a computing environment.
FIG. 11 is a process flow diagram demonstrating an example of functions associated with a transport configuration conversion controller.
FIG. 12 is a schematic representation of a portion of a mining worksite in which a temporary traffic control system is deployed.
FIG. 13 is a schematic representation of a portion of a road construction worksite in which a temporary traffic control system is deployed.
FIG. 14 is a process flow diagram demonstrating an example of coordinating traffic around a mobile work site involving a work machine that is gradually moving forward.
FIG. 15 is a schematic representation of a portion of a forestry/logging operation in which a temporary traffic control system is deployed.
FIG. 16 is a process flow diagram demonstrating one example of controlling access to a road shared by a first work machine and a second work machine traveling in opposite directions.
FIG. 17 is a process flow diagram demonstrating one example of coordinating the transport of a work machine between a first work location and a second work location.

### DETAILED DESCRIPTION

The evolution of autonomous work machinery, particularly in the agricultural sector, has presented both opportunities and challenges. One example of such a challenge lies in selecting an optimal size and efficiency for an autonomous work machine, such as a harvester, seed planter, or even a snow plow. The size of such machines directly impacts operational efficiency within a given work location. A larger machine can rapidly complete its task in a single location, but once finished, it may remain idle, waiting for transport to another location. This downtime represents a significant inefficiency, as the machine sits unused.

Conversely, deploying multiple smaller machines across various locations addresses downtime but introduces other challenges. For example, choosing smaller machines means a strong potential for increased equipment cost, equipment redundancy, and additional maintenance demand. Ideally, a balance would be struck where a single machine can service multiple locations and move between them autonomously, enabling optimization at least in terms of machine size and operational time.

However, autonomous on-road transport of an autonomously moving work machine is not trivial. Navigating autonomously within an agricultural field is one matter, but safely and efficiently traversing public roads, even low-traffic ones, is a different challenge altogether. Most in the agricultural industry at least believe that autonomous on-road transport of off-road work machines is a distant goal, especially given the complexities of traffic regulations and the diverse and changing conditions presented by public roads.

The described challenges are not exclusive to autonomous agricultural machines. The broader realm of autonomous (and even semi-autonomous or non-autonomous machinery) could benefit from a solution that addresses the described and other on-road transport issues. Other machinery, such as but not limited to autonomous snowplows, will benefit from being able to transitioning smoothly between operating locations.

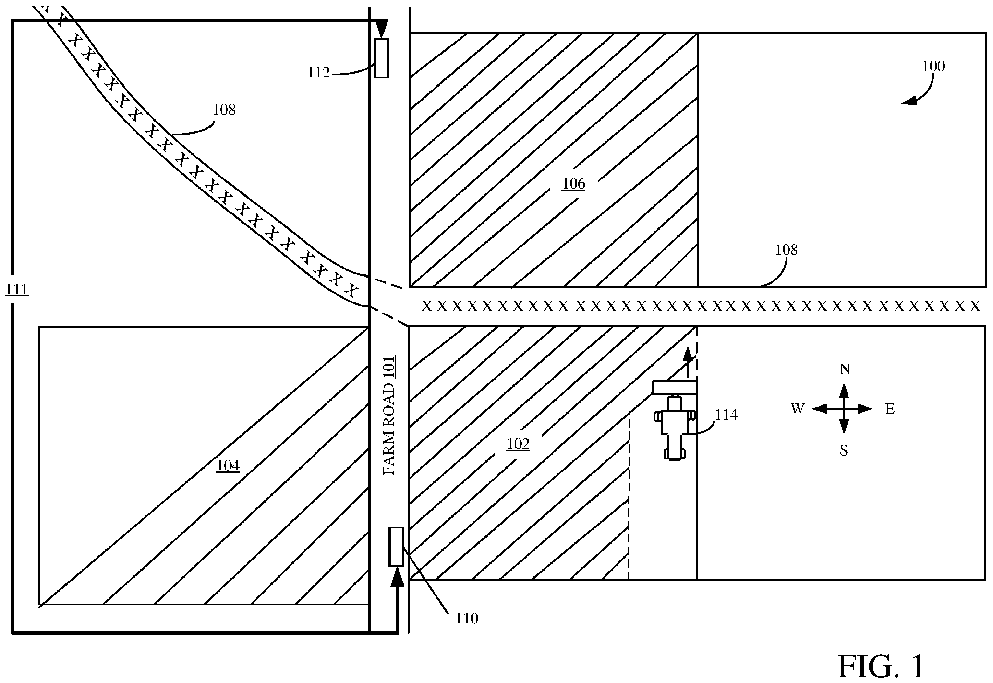

FIG. 1 is a pictorial representation of a farming area 100. Within farming area 100, field 102 is shown in the process of being worked by an autonomous harvester 114. While a harvester is illustrated in order to provide a specific example, the concepts described herein are not so limited. There is just as much applicability to various agricultural machines and, more broadly, to any autonomous, semi-autonomous, or even non-autonomous machinery. For example, in the agricultural realm, there is potential applicability to devices such as harvesters, planters, sprayers, tractors with various attachments, tillers, balers, mowers, and irrigation equipment, just to name a few. Beyond agriculture, there is relevance to construction equipment like excavators, bulldozers, and road pavers. There is also relevance to mining machines, forestry tools and machines, and urban machines like autonomous delivery vehicles, street sweepers, and snow plows. Additionally, there is potential applicability in specialized environments like ground support equipment and machines such as tugs, cargo handlers, and other tools and machines at airports and shipping ports. These are all still simple examples within a broad range of potential applicability.

An eastern portion of field 102 is shown as having already been worked by the autonomous harvester 114, while most of the remainder of field 102 awaits the arrival of the machine for the performance of harvesting operations. Directly north of field 102 is field 106, which is illustratively also ready for harvesting. A creek 108 runs between fields 102 and 106. Creek 108 illustratively operates as a natural barrier preventing the autonomous harvester 114 from directly traversing between fields 102 and 106 without going onto farm road 101, under which creek 108 passes.

The farm road 101 is adjacent to fields 102 and 106 on their western boundary. Field 104 is positioned across farm road 101 to the west of field 102. Field 104 is illustratively also ready for harvesting. Field 104 is illustratively right triangular in shape, with a hypotenuse of the triangle extending from a southwest corner of the field to the point of approximate intersection with farm road 101 at a northeast corner of the field. The northeast corner of field 104 is also close in proximity to creek 108. Fields 104 and 106 are illustratively in line waiting to be harvested by the autonomous harvester 114.

A temporary traffic control system 111 includes two traffic control devices, 110 and 112, that have been strategically positioned along farm road 101. Temporary traffic control device 110 is situated at or near the southern border of fields 102 and 104. Traffic control device 112 is situated further north along farm road 101 at or near the northwest corner of field 106.

The positioning of traffic control devices 110 and 112 along farm road 101 is easily configurable because the traffic control devices 110 and 112 are illustratively designed for temporary rather than permanent placement. Their placement within farming area 100 is illustratively consistent with a planned upcoming operational sequence for the autonomous harvester 114. Accordingly, at or before the time of completion of its harvesting operations in field 102, the autonomous harvester 114 illustratively communicates with the temporary traffic control system 111, more specifically with traffic control device 110 and/or 112, to facilitate a traffic-free, on-road transport across farm road 101 to field 104. At or before the time of completion of its operations in field 104, the autonomous harvester 114 will again coordinate with the temporary traffic control system 111, more specifically with traffic control device 110 and/or 112, to facilitate a traffic-free, on-road transport northward on farm road 101 to the north side of creek 108 where the autonomous harvester 114 accesses field 106 for continuance of harvesting.

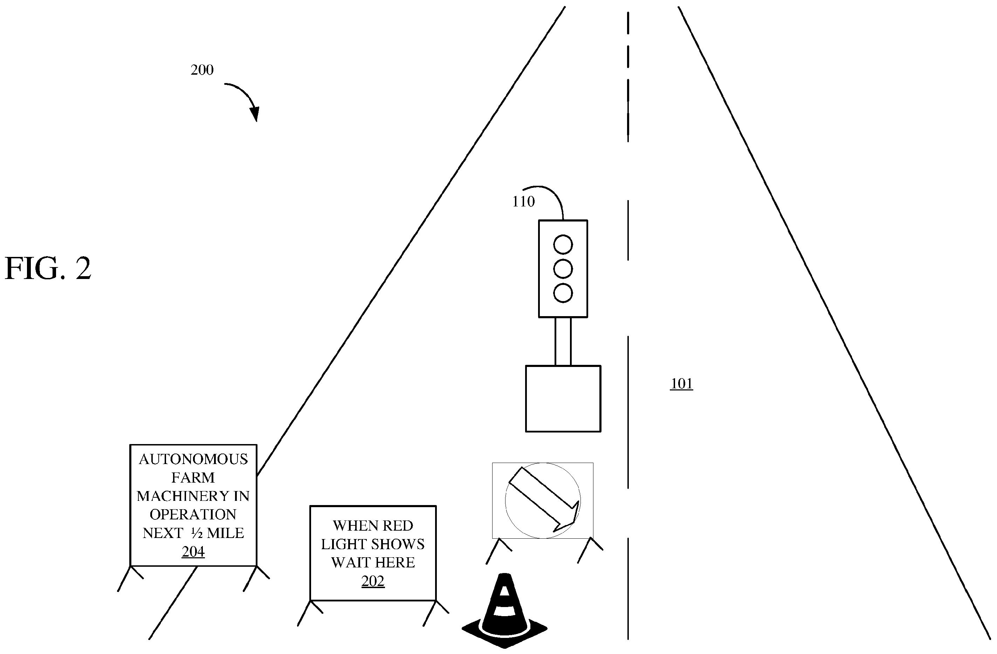

FIG. 2 is a pictorial representation of an on-road traffic control configuration 200 that includes a portion of the temporary traffic control system 111, namely the traffic control device 110. On-road traffic control configuration 200 is an example of what a person driving a car northbound along farm road 101 will illustratively see when approaching the traffic control device 110. A driver headed southbound on farm road 101 will illustratively encounter a similar configuration when coming upon traffic control device 112. However, for the purpose of efficiency, and because traffic control device 112 is likely to operate in a substantially similar manner, only the traffic device 110 scenario will be described in conjunction with the on-road traffic control configuration 200 shown in FIG. 2.

On-road traffic control configuration 200 is just one of myriad possibilities in terms of what a driver will see on the road. Certainly, the exact setup in terms of the positioning of traffic control devices and associated signage, cones, and barriers will vary from one application to another. In some scenarios, signage, cones, and barriers will not even be necessary. Different traffic control configurations will be ideal for different circumstances depending upon numerous applicable variables, including local regulations, local customs, and traffic laws. An important purpose of FIG. 2 is to provide an example of one particular on-road traffic control configuration 200 for the purposes of clarity and completeness.

The particular type of traffic control device 110 shown in FIG. 2 is not to be considered limiting. What is shown is a stacked three-light signal system that illustratively signals using the traditional RED, YELLOW, and GREEN driving cues. A signal system with a different number or different color scheme could just as easily be substituted. Further, the signal system does not even have to be a light system at all. The signal system could just as easily be an automated gate system, a system for providing cues to a human that holds and rotates a sign, an automatically rotating sign, or any other traffic control device. As will become apparent, the interaction between the autonomous off-road vehicle and a traffic control system in order to coordinate an on-road passage between off-road areas is more important than the precise device or approach utilized to provide instructive signals to cars, other vehicles, and/or drivers.

There is no rule that temporary traffic control system 111 includes specifically two traffic control devices. In certain circumstances, for example, only one or more than two traffic control devices will be utilized to communicate with the off-road vehicle to coordinate on-road transport between two off-road locations. The example shown herein, where autonomous harvester 114 is transporting between two fields or driving down the road to transport into another field, are only two examples and should not be considered limiting. One can easily imagine a dead-end road scenario in which the temporary traffic control system 111 includes only one traffic control device. Or, where multiple crossing roads come into play, the temporary traffic control system 111 can just as easily include three or more traffic control devices for temporarily stopping traffic along multiple roads. The examples provided herein are just that - examples.

Now, returning to the description of FIG. 2, the on-road traffic control configuration 200 includes the temporary traffic control device 110 situated on the farm road 101. The purpose of traffic control device 110, which is illustratively the same as the purpose of traffic control device 112, is to facilitate a traffic-free, on-road transport of autonomous harvester 114 between fields 102 and 104 - and then between fields 104 and 106. As is reflected in FIG. 2, traffic control device 110 is a three-light signal system, comprising the traditional green, yellow, and red signal lights. The lights are prominently mounted on a post, the post being anchored in a control box. The control box houses control electronics, power supply components (e.g., battery, solar panel support, etc.), remote communication components, and other components as necessary to support its functionality, which is to coordinate with autonomous harvester 114 and facilitate traffic-free, on-road transports on farm road 101 between the fields, as noted.

Adjacent to traffic control device 110 are signs 202 and 204, which have been included as optional and illustrative components of on-road traffic control configuration 200. The purpose of the signs is to guide and inform road users as to when and why road users should go ahead down or wait before going further down farm road 101. Sign 202 reads: "WHEN RED LIGHT SHOWS, WAIT HERE." This directive ensures that vehicles come to a halt at a designated spot when the light is red, thus maintaining a safe distance from the autonomous machinery passing further down farm road 101. Sign 204 notifies road users as to the rationale: "AUTONOMOUS FARM MACHINERY IN OPERATION NEXT ½ MILE." This sign informs as to the ongoing operation. Such signs are, of course, optional and will not be necessary in every circumstance.

The on-road traffic control configuration 200 shown in FIG. 2 also includes a collection of traffic barriers, cones, and an arrow sign positioned on and/or proximate to the farm road 101. These elements are optional and will not be necessary in every circumstance. There can also be additional strategically placed traffic cones further down the road, for example, to transform the two-lane road into a single-lane road. The precise traffic control barriers, signs, and cones that accompany the temporary traffic control system 111 will likely vary from one application to the next. The specific components of the on-road traffic control configuration 200 shown in FIG. 2 have been selected simply for the purposes of providing clarity and understanding of the overarching goal of enabling an autonomous vehicle to self-initiate and conduct traffic-free, on-road transports between off-road areas.

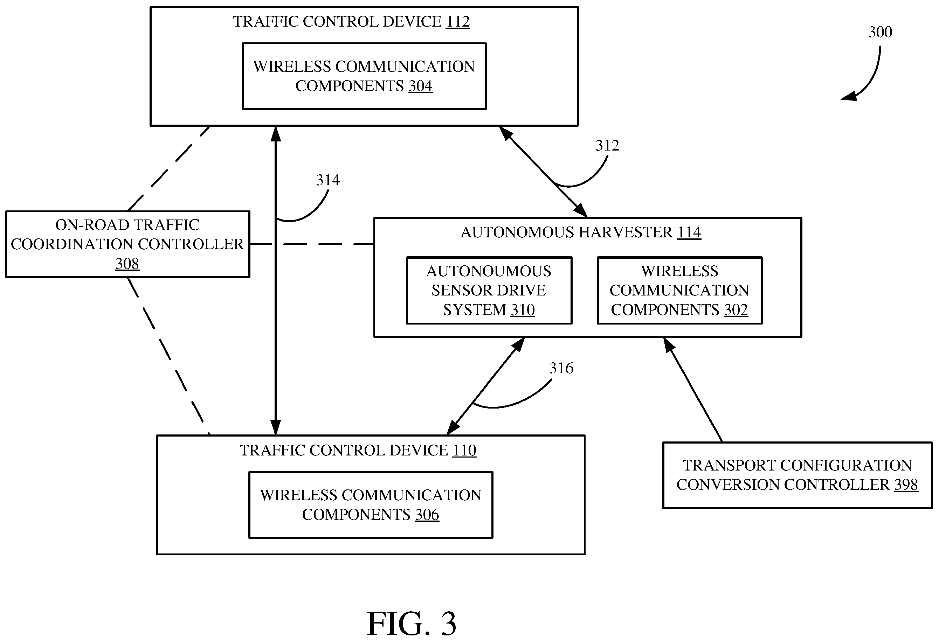

FIG. 3 is a schematic representation 300 of an example of a deployment of an on-road traffic coordination controller 308. Schematic representation 300 includes traffic control devices 110 and 112, as well as the autonomous harvester 114. Again, a temporary traffic control system 111 that includes more or fewer traffic control devices is also contemplated. The autonomous harvester 114, traffic control device 112, and traffic control device 110 illustratively include wireless communication components 302, 304, and 306, respectively. These wireless communication components illustratively enable wireless communication between the traffic control devices 110 and 112 and with the autonomous harvester 114. These wireless communication channels are represented by arrows 312, 314, and 316. These arrows illustratively symbolize bidirectional communication channels, emphasizing potentially ongoing exchanges of information. Thus, FIG. 3 reflects a wireless communication framework that enables the autonomous harvester 114 to interact seamlessly with the two traffic control devices, and the two traffic control devices to interact with one another.

As will become more apparent, in another conceived configuration, there is no need for the traffic control devices 110 and 112 to communicate with one another. Further, in another conceived configuration, there is no need for the autonomous harvest to interact with both traffic control devices 110 and 112. Where channels of communication are not necessary, unnecessary communication equipment can be eliminated, thereby reducing implementation costs. But for the purpose of supporting the most inclusive approach, all possible channels of wireless communication are assumed to be included and supported in FIG. 3.

The specific mode of wireless communication employed between the traffic control device (s) 110/112 and the autonomous harvester 114 is not to be considered a limiting factor. Numerous wireless communication methodologies, both existing and emerging, can be seamlessly integrated into the framework. Examples include traditional cellular communication (like 4G, 5G), Wi-Fi, radio frequency (RF) communication, Bluetooth, satellite communication, near-field communication (NFC), ultra-wideband (UWB), Zigbee, Long Range Wide Area Network (LoRaWAN), and even optical communication methods such as Li-Fi. In one example, the overall system is designed with adaptability in mind, ensuring compatibility with a wide range of wireless technologies, allowing for flexibility in deployment based on environmental conditions, range requirements, data transmission speeds, and other specific needs.

Another component shown in FIG. 3 is the on-road traffic coordination controller 308. The on-road traffic coordination controller 308 is shown with a dotted connection to traffic control device 110, traffic control device 112, and autonomous harvester 114. This representation reflects and assumption that the component can be completely deployed from onboard any of these three elements or can be distributed across any combination thereof. Thus, by showing the on-road traffic coordination controller 308 outside of elements 110, 112, and 114, this reflects the idea that the on-road traffic coordination controller 308 can actually be completely or partially operably deployed from onboard any of the three, depending upon design preferences, etc. Distribution of the on-road traffic coordination controller 308 allows for decentralized processing and decision-making, which may or may not be necessary for a given implementation. Regardless of how the on-road traffic coordination controller 308 is deployed, one example of a purpose of on-road traffic coordination controller 308 is to manage and facilitate communications between the autonomous harvester 114 and the traffic control devices 110 and 112 as necessary for the programmatic logic of the on-road traffic coordination controller 308 to also facilitate traffic-free, on-road transports of the autonomous harvester 114 between off-road areas. It should also be pointed out that the on-road traffic coordination controller 308, in one example, is deployed partially or completely from a remote device such as a server that is configured to support communications with components 110, 112, and 114, as necessary to support execution of its programmatic logic.

In one example, an additional component and related functionality are included in some examples, the additional component being a transport configuration conversion controller 398. Transport configuration conversion controller 398 is illustratively configured programmatically to deploy logic as necessary to initiate, manage, and coordinate the timing of one or more transport reconfiguration routines. Transport reconfiguration routines illustratively involve transitioning all or portions of a work machine, for example, but not limited to autonomous harvester 114, into (or out of, as appropriate) a transportation configuration. For example, one or more transport reconfiguration routines are illustratively utilized to prepare to move across a road (or some other transport area). Then, another transport reconfiguration routine or routines are utilized to prepare for work operations after moving across the road (or some other transport area). Examples of functions executed during a transport reconfiguration routine include, but certainly are not limited to:
a. Folding and Unfolding Extendable Components:
   The transport configuration conversion controller 398 illustratively initiates and manages a retraction or extension of headers, arms, booms, wings, or other operational components. For example, during a transport reconfiguration routine, the autonomous harvester 114's header is illustratively folded inward to reduce its width. Conversely, transitioning out of the transportation configuration, a transport reconfiguration routine illustratively involves reversing previous operations, for example, extending a header back to its full working length.
b. Adjusting Vehicle Height and Ground Clearance:
   For various reasons, such as ensuring compliance with transport regulations or optimizing stability during travel, the transport configuration conversion controller 398 is illustratively configured during a transport reconfiguration routine to initiate and manage dynamic adjustments. In the context of the autonomous harvester 114 (though not by limitation), this, in some examples, means lowering a chassis when transitioning into a transportation configuration and raising the chassis when readying for resumed harvesting operations.
c. Engaging or Disengaging Locking Mechanisms:
   When transitioning into a transportation configuration, the transport configuration conversion controller 398 illustratively initiates and manages a locking of critical components in place as part of a transport reconfiguration routine to prevent movement, damage, etc. When transitioning out of the transportation configuration, these locks are illustratively disengaged as part of a transport reconfiguration routine to allow full mobility of (and access to, etc.) components needed for resumed operations.
d. Activating Safety Markings and Signals:
   For the transportation configuration, the transport configuration conversion controller 398 illustratively utilizes one or more transport reconfiguration routines to activate reflective markings, hazard lights, or other transport-specific signals to promote visibility and safety. Deactivation is illustratively accomplished as part of the transport configuration conversion routines for transitioning back out of the transportation configuration.
e. Reconfiguring Wheel Alignment and Axle Positioning:
   In another example of a transport reconfiguration routine, autonomous harvester 114's (or another work machine's) wheels or axles are shifted in position for various reasons, such as to optimize maneuverability or load distribution. The transport configuration conversion controller 398 illustratively initiates and manages adjustments of this type when moving into and out of the transportation configuration.
f. Toggling Power Distribution Modes:
   The transport configuration conversion controller 398 illustratively adjusts power settings when moving into and out of a transportation configuration. For example, more power is illustratively allocated to propulsion systems during transport, while work operations systems like harvesting mechanisms are powered down, etc.
g. Calibrating Sensors for Transport or Operation:
   The transport configuration conversion controller 398 illustratively is configured to adjust and/or recalibrate sensors based at least in part on whether or not the work machine (e.g., the autonomous harvester 114) is in a transportation configuration. For example, when out of the transportation configuration, priority is illustratively given to proximity sensors for field navigation, while in transport mode, priority is illustratively given to road sensors, GPS systems, etc.
h. Adjusting Communication Protocols:
   The transport configuration conversion controller 398 illustratively is configured to adapt communication protocols between the autonomous harvester 114 (not by limitation) and external systems. For example, when in a transportation configuration, communication is illustratively focused on traffic coordination with the temporary traffic control system 111, while when not in the transportation configuration, emphasis is illustratively given to field-specific telemetry and coordination with other agricultural equipment, etc.

In one example, the transport configuration conversion controller 398 is configured programmatically not only to initiate and manage functions that are part of transport reconfiguration routines (e.g., functions required for reconfiguring autonomous harvester 114 into or out of a transportation configuration), but is also configured programmatically to optimize timing of such functions. This optimization illustratively involves programmatic coordination of an order of functions of transport reconfiguration routines to ensure efficiency and readiness for a given operational context. In one example, the transport configuration conversion controller 398 is configured programmatically to factor in the information received from external systems, such as from the temporary traffic control system 111, to determine programmatically the most desirable time for executing specific functions that are part of a transport reconfiguration routine.

In one example, the temporary traffic control system 111 and/or the on-road traffic coordination controller 308 (or another related component) are equipped with programmatic logic that causes them to communicate status updates to the transport configuration conversion controller 398, indicating whether a designated transport area, such as a farm road, is available and/or an indication indicative of when it is expected to become available. The transport configuration conversion controller 398 illustratively utilizes this information programmatically as a trigger to intelligently sequence transport reconfiguration routine functions, etc. For instance, certain preparatory steps, such as disengaging operational locks or folding extendable components, are illustratively initiated while the work machine is not necessarily finished with its work (i.e., non-transport related) activities. This anticipatory execution ensures that a transition into the transportation configuration is completed as soon as a road becomes available, minimizing downtime and increasing overall efficiency. In another example, the transport configuration conversion controller 398 is configured programmatically to factor in environmental and situational variables when managing the timing of functions that are part of transport reconfiguration routines. The transport configuration conversion controller 398 in some examples is configured to facilitate production of or at least review of an analysis of sensor data to verify that sufficient clearance exists before initiating functions such as folding or adjusting height. Similarly, in another example, programmatic instructions are illustratively executed to coordinate timing to ensure, for example, that locking mechanisms are engaged only after all relevant components are fully retracted, avoiding potential mechanical interference or damage, etc.

In some examples, such as where timing is critical or desirable, the transport configuration conversion controller 398 is illustratively configured programmatically to prioritize specific functions of transport reconfiguration routines to align with broader objectives or requirements. The temporary traffic control system 111 in one example is configured programmatically support assignment of a transport window for the autonomous harvester 114, and the transport configuration conversion controller 398 is then programmatically configured to time functions to ensure readiness within that window. Such coordination, in one example, includes delaying certain less-essential functions until after a transport window is secured, or preemptively completing functions for ideal timing purposes, etc.

In another example, the transport configuration conversion controller 398 is programmatically configured to maintain communication with other subsystems of the work machine (e.g., autonomous harvester 114) to dynamically adjust timing logic. For instance, if the work machine detects that it has completed its current task ahead of schedule, the transport configuration conversion controller 398 illustratively initiates transport reconfiguration routines earlier than initially scheduled, provided that safety and operational constraints are satisfied. Conversely, if delays are detected, such as the presence of unexpected obstacles, the transport configuration conversion controller 398 is illustratively configured programmatically to dynamically delay functions of transport reconfiguration routines to avoid unnecessary activation, etc.

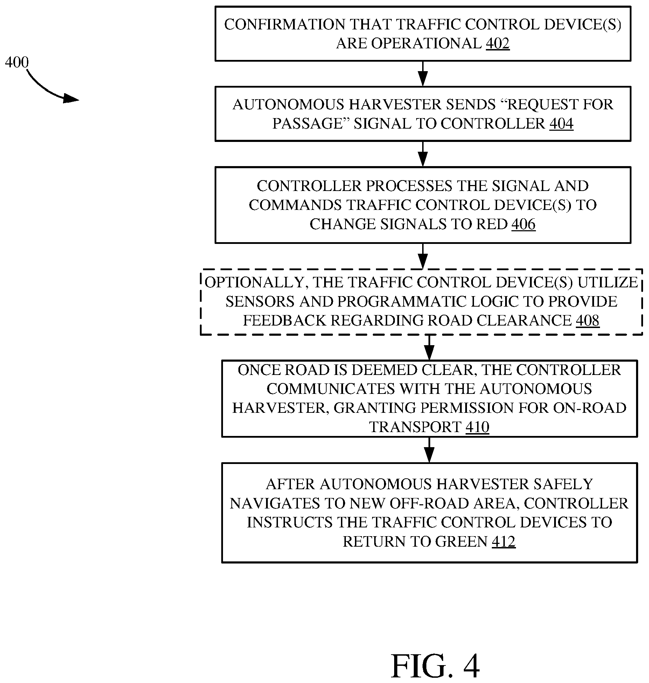

FIG. 4 is a process flow diagram demonstrating an example flow 400 for coordination between the autonomous harvester 114 and the temporary traffic control system 111 (e.g., including at least one of the traffic control devices 110 and 112). The on-road traffic coordination controller 308 is illustratively a computer implemented logic component configured to programmatically manage and carry out the steps associated with the example flow 400. For example, the on-road traffic coordination controller 308 is illustratively configured to coordinate commands and interactions between the autonomous harvester 114 and the traffic control devices 110 and 112, as necessary to support the elements of example flow 400.

In accordance with block 402, before commencing an on-road crossing between off-road areas, the on-road traffic coordination controller 308 is illustratively programmed to execute computer-implemented instructions that cause the on-road traffic coordination controller 308 to verify the operational status of at least one of the traffic control devices 110 and 112, ensuring that traffic control devices 110 and 112 are active and responsive. Those skilled in the art will appreciate that the precise approach utilized to confirm the operational status of one of or both of the traffic control devices is less important than the overall concept of the confirmation itself.

In accordance with block 404, after the operational status of the traffic control device(s) has been confirmed, and when the autonomous harvester 114 programmatically identifies an upcoming or immediate need to transition between fields, a "request for passage" signal is transmitted to the on-road traffic coordination controller 308 either directly or indirectly by the autonomous harvester 114. In accordance with block 406, upon receipt of this request, the on-road traffic coordination controller 308 processes the received signal and subsequently commands both traffic control mechanisms to activate red lights, thereby instructing other vehicles on the road to stop. In one example, the on-road traffic coordination controller 308 is configured such that no further action is taken until the lights have stayed on red for a programmatically and/or user selected amount of time.

Block 408 represents an optional step in which the on-road traffic coordination controller 308 collects and logically accounts for road clearance feedback from the temporary traffic control system 111. In one example, this means the traffic control devices 110 and/or 112 are equipped with one or more sensors that detect the presence of a vehicle on the farm road 101. For example, upon detection by one of the traffic control devices 110 and 112 of a vehicle entering the stretch of farm road 101 where on-road transport of the autonomous harvester is to occur, the device 110/112 is then programmed to cooperate with a programmatic routine for verifying that the vehicle has exited the autonomous crossing area. In one example of this scenario, once the on-road traffic coordination controller 308 has been notified by one of the traffic control devices of a vehicle entry, the on-road traffic coordination controller 308 is then programmed to anticipate a corresponding detection at the second traffic control device confirming the exit of the vehicle. Once this second detection is received, the programmatic instructions are illustratively configured to again assume that the stretch of road is clear of vehicles and ready for on-road transport of the autonomous harvester 114.

In another example scenario, the on-road traffic coordination controller 308 is programmed to utilize a different method to determine whether a detected vehicle has exited the on-road transport area. For example, a programmatically selected amount of time is allocated after a vehicle is detected. After the passage of the allocated amount of time the allocated amount of time is passed, a programmatic assumption is illustratively made that the stretch of road is again clear and ready for on-road transport. In one example, the programmatically selected amount of time is selected based at least in part on a user selected provided value and/or based on a determined distance between the traffic control devices, etc. In one example, the traffic control devices and/or the autonomous harvester 114 are configured to programmatically calculate or otherwise determine a distance between the traffic control devices, the determined distance being a variable upon which the programmatically selected amount of time is determined. These are but examples of methods that are programmatically deployed in order to provide further assurance that the on-road transport area is free of vehicles.

Block 408, in another example, represents an optional step in which the on-road traffic coordination controller 308 collects and logically accounts for road clearance feedback from a source other than the temporary traffic control system 111. In one example of this, a secondary sensing device (such as but not limited to data gathered using sensors deployed on an unmanned aerial vehicle) provides data to the on-road traffic controller as part of a supplemental or backup system. Thus, in this case, the on-road traffic coordination controller 308 is programmed to receive as input data from the secondary sensing device. This data, in one scenario, is an indication of whether a vehicle is or is not in the on-road transport area. The logic in one example is even more complex, such as whether a vehicle in the on-road transport is authorized or non-authorized. Information from the secondary sensing device is then incorporated into the programmatic logic employed by the road traffic coordination controller 308 to coordinate instructions executed by the temporary traffic control system 111 and/or the autonomous harvester 114. These are but additional examples of methods that are programmatically deployed in order to provide further assurance that the on-road transport area is free of vehicles.

The on-road traffic coordination controller 308, in another example scenario, is programmed to select and provide feedback to the autonomous harvester 114 and/or any other vehicle (e.g., through a user application on a user device) as to what their operating status should be at any given moment before, during or after entry into an active area by the autonomous harvester 114. Options for such feedback include but are not limited to an instructed status of a light signal, a sound signal, or an operational instruction (e.g., pull off to the side of the road). These are but additional examples of methods that are programmatically deployed in order to provide further assurance that the on-road transport area is safe for the presence of the autonomous harvester 114.

In still another example, the on-road traffic coordination controller 308 is programmed to incorporate one or more data points input into the decision-making calculus by a human supervisor that may be office site observing (e.g., observing images from a drone or other camera system) or onsite observing (e.g., a flag person with a user interface configured for interaction with the on-road traffic coordination controller 308. The on-road traffic coordination controller 308 is, in one scenario, configured to receive approvals of certain vehicles (e.g., grain trucks) to enter an area for which the on-road traffic coordination controller 308 is otherwise configured to facilitate restriction of access in accordance with examples described herein. The on-road traffic coordination controller 308 is thus, in one example, configured to accommodate some but not all traffic before, during, or after the presence of the autonomous harvester 114 on the road. The on-road traffic coordination controller 308, in another example scenario, is programmed to select and provide feedback (e.g., through a user application on a user device) as to what the operating status should be for approved vehicles before, during, or after entry into an active area by the autonomous harvester 114. Options for such feedback include but are not limited to an instructed status of a light signal, a sound signal, or an operational instruction (e.g., pull off to the side of the road). These are but additional examples of methods that are programmatically deployed in order to provide further assurance that the on-road transport area is safe for the presence of the autonomous harvester 114.

In accordance with block 410, once the road is programmatically determined to be clear of vehicles, the on-road traffic coordination controller 308 is configured to communicate with the autonomous harvester 114 and programmatically grant permission to proceed with on-road transport between off-road areas.

The autonomous harvester 114, equipped with advanced perception systems primarily designed for its harvesting operations, illustratively leverages these same systems during on-road transport between off-road areas. These perception systems, comprising any or all sensors, cameras, and other detection mechanisms, continuously monitor the harvester's surroundings, ensuring its effective navigation on the road. In the unlikely event that a vehicle ends up on the road during an on-road transport operation, the same perception systems are illustratively programmed to detect such an anomaly promptly. Upon detection, the autonomous harvester is illustratively configured to initiate an alternative protocol, such as slowing down, stopping, or taking evasive maneuvers.

In some examples, it is not just one but multiple work machines that are configured to transport (e.g., transport autonomously or semi-autonomously) between off-road areas once the road has been deemed clear (e.g., consistent with step 410 in FIG. 4). In one such scenario the on-road traffic coordination controller operates in substantially the same manner with all work machines crossing (e.g., each work machine similarly configured for interaction and coordination with the on-road traffic coordination controller 308). In one example, a plurality of vehicles is programmatically controlled instead of just one, such as a plurality of vehicles crossing a road that has been deemed clear somewhat simultaneously (or at least one after another, etc.). In another example, though a plurality of work machines is controlled to travel on the same road, they need not necessarily be programmatically guided to the same off-road location (e.g., different work machines are controlled to different off-road locations during one period of time when the road is deemed clear, etc.).

In a scenario in which multiple work machines are moving between off-road locations during the same period in which a road is deemed clear, not all work machines need to be identically interacted with and managed by the on-road traffic coordination controller. In one example, a secondary work machine (e.g., a grain cart, a fuel truck, etc.) is illustratively configured programmatically to follow a primary work machine (e.g., autonomous harvester 114) between off-road locations, relying on the primary work machine for handling key interactions with the on-road traffic controller 308. As such, the secondary work machine(s) in some examples is programmed to move between off-road locations with limited or no interaction with the on-road traffic coordination controller 308. In one example, the secondary machine(s) is configured to communicate with its associated primary work machine (e.g., in a master/slave style of interaction). One can illustratively imagine a chain of work machines moving across a road between off-road work locations, similar to a mother duck crossing a road followed by its ducklings.

In accordance with block 412, after the autonomous harvester 114 has successfully moved between off-road areas, the on-road traffic coordination controller 308 is then configured to direct the traffic control devices to revert to a default state, for example activating green lights, allowing standard traffic flow to resume. In one example of this, the transport configuration conversion controller 398 is illustratively configured to operate with example flow 400 shown in FIG. 4, such that a transport reconfiguration routine is triggered within flow 400 at a moment determined programmatically to cause the autonomous harvester to be ready for on-road transport once deemed clear in accordance with step 410 (though a transport reconfiguration routine in other examples is triggered within flow 400 after deemed clear in accordance with step 410). Then, once the autonomous harvester 114 is in a new location following step 412, the transport configuration conversion controller 398 is configured programmatically to trigger a transport reconfiguration routine that will cause a transition out of the transportation configuration. By programmatically supporting real-time data inputs, predictive modeling, and/or dynamic coordination of timing, the transport configuration conversion controller 398 ensures that transitions into and out of the transportation configuration are optimized not only for the individual work machine (which may or may not be autonomous harvester 114, and which may or may not be an autonomous work machine), but also for the broader operational and logistical framework in which it operates. This intelligent timing management enhances the utility of the work machine (e.g., of autonomous harvester 114), reduces inefficiencies, and ensures seamless integration with external systems such as the temporary traffic control system 111. Similar to how all or portions of the on-road traffic coordination controller may be deployed from any or or all of devices 110/112, the autonomous harvester 114 or from a separate remote server, the specific location from which all or portions of the transport configuration conversion controller 398 is deployed is not limited one particular placement or distribution.

While the foregoing description has been presented in most instances in the context of an autonomous harvester 114, it should be emphasized that the concepts and principles described herein are not limited to this specific type of work machine. The triggers, management, and timing of transport reconfiguration routines as implemented by the transport configuration conversion controller 398 are equally applicable to a wide range of machinery functioning in conjunction with a temporary traffic control system such as temporary traffic control system 111, both autonomous and non-autonomous work machines included. The autonomous harvester 114 is illustratively provided as a specific example for clarity; however, the described functionality has broad applicability across numerous types of machines and operational contexts. Similar concepts are equally applicable to deployments of other temporary traffic control systems described below in relation to other Figures.

Within the agricultural domain, concepts described herein are readily adaptable to various work machines, including but not limited to planters, sprayers, tractors with various attachments, tillers, balers, mowers, and irrigation equipment. For example, a tractor equipped with multiple detachable implements in one example utilizes a transport configuration conversion controller 398 to programmatically trigger and manage a folding of attachments and assuring their secureness for road travel. Similarly, a sprayer in one example transitions into a compact transport configuration by the triggering and management of the retracting of its booms, and a baler in one example is reconfigured for transport by reducing its height and width for compliance with road regulations. These are simply additional examples.

Beyond agriculture, the described concepts have relevance to other industries. Construction equipment such as excavators, bulldozers, and road pavers are examples of additional work machines that benefit from the described automated triggering and management of reconfiguration routines to ensure safe and efficient transitions between work sites or work locations. For instance, an excavator illustratively retracts its arm and locks its bucket for transport, while a road paver illustratively adjusts its width to accommodate narrow transport routes, etc.

Mining machinery and forestry equipment similarly exemplify broader applicability. Machines such as haul trucks, drilling rigs, and logging equipment often operate in remote areas requiring transport over rough or regulated terrain. The transport configuration conversion controller 398 illustratively facilitates retraction of arms, stabilization systems, or other operational components to prepare these vehicles for safe transport.

The described concepts also extend to urban and specialized environments. For instance, autonomous delivery vehicles, street sweepers, and snow plows illustratively utilize the transport reconfiguration routines to fold or retract components when moving between service areas. In specialized environments such as airports, ground support equipment like baggage loaders or refueling trucks illustratively transition between compact transport configurations for travel on taxiways and expanded operational configurations for servicing aircraft. Similarly, in ports, autonomous cargo handlers illustratively benefit from the described concepts when navigating between docks and storage areas.

These examples are merely illustrative and are not intended to limit the scope of the described functionality. The transport configuration conversion controller 398 is programmatically configurable to accommodate a wide variety of vehicles, work machines, operational needs, and reconfiguration requirements, ensuring that the concepts described herein can be readily applied across diverse industries and use cases. Whether implemented in autonomous or operator-driven machinery, the described routines enhance operational efficiency, safety, and adaptability, making them suitable for an extensive range of applications.

Some or all examples provided herein pertain to a transport configuration conversion system for a work machine (such as but not limited to being autonomous harvester 114). The transport configuration conversion system illustratively includes a transport configuration conversion controller (e.g., 398 in FIG. 3) that initiates a first transport reconfiguration routine to transition the work machine from an operation configuration to a transport configuration. The transport configuration controller illustratively initiates the first transport reconfiguration routine at least partially in response to an indication from the work machine that it is ready to move across a road from a first off-road work location (e.g., 102 in FIG. 1) to a second off-road work location (e.g., 104 or 106 in FIG. 1). In one example, the transport configuration conversion controller initiates a second transport reconfiguration routine to transition the work machine from a transport configuration to an operation configuration after a programmatic determination that the work machine has moved across the road from the first off-road work location to the second off-road work location.

Initiation of the first transport reconfiguration routine by the transport configuration conversion controller is in one example coordinated with a receipt by an on-road traffic coordination controller of a status of traffic on the road. In one example, the status of the traffic on the road is determined at least in part on information derived from a sensor. In one example, the status of the traffic on the road is determined at least in part on information derived from a sensor on a traffic control device positioned on the road. In one example, the transport configuration conversion controller is further configured to communicate with an on-road traffic coordination controller so as to coordinate a timing of the first transport reconfiguration routine with a display of a signal on a traffic control device that is part of a temporary traffic control system. In one example, the first transport reconfiguration routine comprises a routine to fold an extendable component of the work machine. In another example, the first transport reconfiguration routine comprises a routine to change a power distribution characteristic of the work machine. In one example, the transport configuration conversion controller is integrated with a user interface that provides a status update and allows a manual override of the first transport reconfiguration routine.

In one example, a work machine illustratively includes a transport configuration conversion controller (e.g., 398 in FIG. 3) that initiates a first transport reconfiguration routine to transition at least a portion of the work machine from an operation configuration to a transport configuration. The transport configuration conversion controller also illustratively initiates a second transport reconfiguration routine to transition at least a portion of the work machine from a transport configuration to an operation configuration. In one example, an on-road traffic coordination controller coordinates a timing of the first and second transport reconfiguration routines with a changing of a signal of a traffic control device that is part of a temporary traffic control system. In another example, an autonomous sensor drive system (e.g., 310 in FIG. 3) facilitates movement of the work machine from a first work location to a second location, the transport configuration conversion controller being configured to initiate the first transport reconfiguration routine while the work machine is in the first location and the second transport reconfiguration routine while the work machine is in the second location. In one example, a timing of the changing of the signal of the traffic control device is coordinated with a request from the mobile work machine to switch between work locations. In another example, the on-road traffic coordination controller coordinates a timing of the first reconfiguration routine with receipt of an indication that a road where the work machine will travel is free of vehicles.

Examples of the work machines described are illustratively, but not necessarily, an autonomous work machine. In one example, it is an autonomous snow plow. In one example, an autonomous show plow is in a first off-road work location (e.g., a parking lot) and a temporary traffic control system operating as described herein is utilized to facilitate its movement across a road to a second off-road work location (e.g., a second parking lot). In one example, this includes, as has been described, triggering a transport configuration conversion routine into a transport configuration before moving across the road, and then into an operation configuration after transporting across the road. This is but one example of how concepts described herein are applied to scenarios other than a harvesting context.

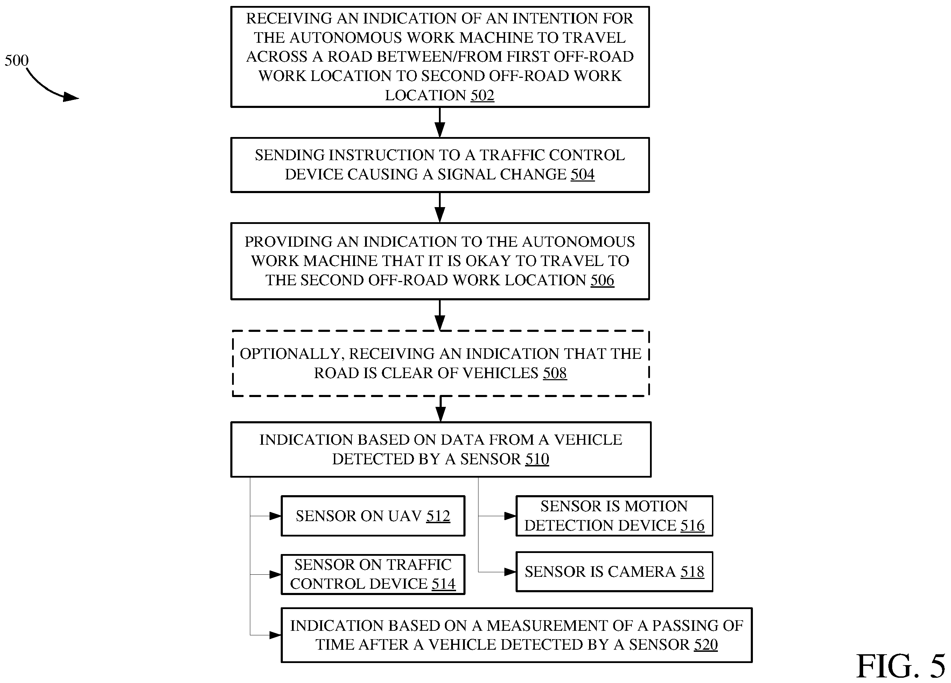

FIG. 5 is a process flow diagram demonstrating an example flow 500. Flow 500 illustratively demonstrates an example of coordination between an autonomous work machine (of which autonomous harvester 114 is but one example) and at least one the traffic control device (examples of which are devices 110 and 112). In accordance with flow 500, an autonomous work machine is illustratively controlled so as to coordinate a transport of the autonomous work machine between a first off-road work location (e.g., 102 in FIG. 1) separated by a farm road (e.g., 101 in FIG. 1) to a second off-road work location (e.g., 104/106).

Step 502 illustratively includes receiving (e.g., received by the on-road traffic coordination controller 308 in FIG. 3) from the autonomous work machine an indication of an intention for the autonomous work machine to travel across the road from the first off-road work location to the second off-road work location. Step 504 illustratively includes sending (e.g., sent by the on-road traffic coordination controller 308 in FIG. 3) an instruction to a traffic control device (e.g., 110/112 in FIG. 1) that is a component of a temporary traffic control system (e.g., 111 in FIG. 1). The instruction illustratively initiates a signal change. Step 506 illustratively includes providing (e.g., provided by the on-road traffic coordination controller 308 in FIG. 3) an indication to the autonomous work machine that it is okay for the autonomous work machine to travel across the road from the first off-road work location to the second off-road work location.

Block 508 illustratively represents an additional step of receiving (e.g., received by the autonomous work machine) an indication that the road is clear of vehicles in an area of the road between the first off-road work area and the second off-road work area. Block 508 is shown in a dotted box to indicate that it is an optional step, and is shown separated from blocks 502, 504, and 506 to emphasize a degree of flexibility in terms of timing relative to the other blocks in flow 500. In accordance with block 510, the received indication is based on data from a sensor. In accordance with block 512, the sensor is on an unmanned aerial vehicle. In accordance with block 514 the sensor is on or attached to the traffic control device. In accordance with block 516, the sensor is a motion detection device, for example, a device that detects a presence or absence of vehicles on the road. In accordance with block 518, the sensor is a camera, such as a camera that detects a presence or absence of vehicles on the road (e.g., a pole mounted camera, a camera on an unmanned aerial vehicle, etc.). In accordance with block 520, the indication that the road is clear is an indication that is programmatically generated based at least in part on a measurement of a passing of time after a vehicle has been detected by a sensor.

Flows 400 and 500 are illustratively editable to accommodate any number of advanced technology integrations into an autonomous work machine (e.g., autonomous harvester 114) and/or the temporary traffic control system 111. Any number of sensors can be added, enhancing an ability to perceive and respond to real-time road conditions. Further, by incorporating AI-driven algorithms, decision-making can be further refined, allowing for more adaptive responses based on varying scenarios. Further, integration with real-time traffic data sources illustratively provides a broader perspective on road conditions and potential traffic patterns, thereby enhancing both operational efficiency and effectiveness.

In one example, functions of the on-road traffic coordination controller 308 (FIG. 3) are illustratively deployed programmatically utilizing at least one processor and optionally at least one server. As has been described, functions of the on-road traffic coordination controller 308 are distributable in any combination across autonomous harvester 114 and/or with one or more of the traffic control devices included as part of the temporary traffic control system 111, such as traffic control devices 110 and 112. In one example, the processors and optional server(s) include computer processors with associated memory and timing circuitry. The processors and server(s) are functional parts of the systems or devices to which they belong and are activated by, and facilitate the functionality of the other components or items in those systems. In addition, or alternatively, functionality is deployed from a remotely situated computing device such as a networked computing device that is not an integral part of autonomous machine or any component of a temporary traffic control system. In one example, deployment is part of a cloud hosted computing device or even a connected user-type device such as a laptop or a mobile phone. All options for distribution are possible.

Up to this point, there has not been mention of a user interface or other display component. It is contemplated for there to be an application for managing functions (e.g., functions of the on-road traffic coordination controller 308) to be optionally provided with or without a user interface. For example, the autonomous harvester 114 and/or one or more of the traffic control devices 110 and 112 are illustratively outfitted with an applicable user interface display. In another example, some or all functions of the on-road traffic coordination controller 308 are linked to, or even embedded so as to run from, a user-focused computing device, such as but not limited to a mobile computing device such as a mobile phone or a tablet. Incorporated displays are variable at least in that they can take a wide variety of different forms and can have a wide variety of different user actuatable input mechanisms disposed thereon. For instance, in some examples, the user actuatable input mechanisms are text boxes, check boxes, icons, links, drop-down menus, search boxes, etc. The mechanisms are illustratively actuatable in a wide variety of different ways. For instance, the mechanisms are in some examples actuated using a point and click device (such as a track ball or mouse). The mechanisms in other examples are actuated using hardware buttons, switches, a joystick or keyboard, thumb switches or thumb pads, etc. The mechanisms in some examples are actuated using a virtual keyboard or other virtual actuators. In addition, where the screen on which they are displayed is a touch sensitive screen, they in some examples are actuated using touch gestures. Also, where the device that displays them has speech recognition components, they are in some examples actuated using speech commands.

Up to this point, there has not been mention of any data stores being described as being an integral part of any of the described technologies. However, it is contemplated for functions of the on-road traffic coordination controller 308 to be optionally supported by one or more data stores. Similar to the options described for distribution of processing functions, all options for distribution of data store resources are possible. Data stores can also each be broken into multiple data stores. All can be local to the systems accessing them, all can be remote, or some can be local while others are remote. Also, any or all of the data stores can be remotely integrated from a separate device such as a remotely deployed computing system, a user device such as a mobile phone or laptop, or otherwise remotely deployed. All of these configurations are contemplated herein. And all configuration can of course be distributed in any combination across the autonomous harvester 114 and/or one or more of the traffic control devices (e.g., 110, 112) included in the temporary traffic control system 111.

Also, the FIGS. show a number of blocks with functionality ascribed to each block. It will be noted that fewer blocks can be used so the functionality is performed by fewer components. Also, more blocks can be used with the functionality distributed among more components.

It will be noted that the above discussion has described a variety of different systems, components, and/or logic. It will be appreciated that such systems, components and/or logic can be comprised of hardware items (such as processors and associated memory, or other processing components, some of which are described below) that perform the functions associated with those systems, components, generators, and/or logic. In addition, the systems, components, generators, and/or logic can be comprised of software that is loaded into a memory and is subsequently executed by a processor or server, or some other computing component, as described below. The systems, components, generators, and/or logic can also be comprised of different combinations of hardware, software, firmware, etc., some examples of which are described below. These are only some examples of different structures that can be used to form the systems, components, and/or logic described above. Other structures can be used as well.

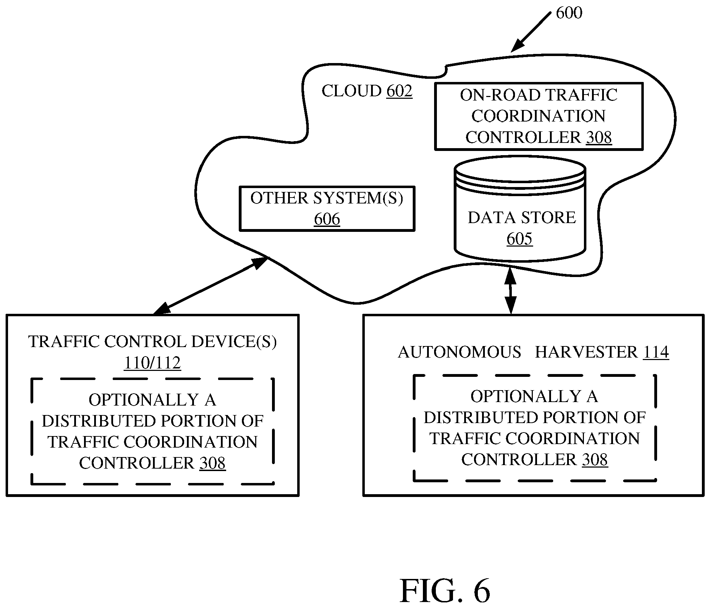

FIG. 6 is a schematic diagram of an on-road traffic coordination controller 308 deployed within a remote server architecture 600 that includes a cloud 602. In one example, this means at least one other portion of on-road traffic coordination controller 308 (e.g., a portion integrated with autonomous harvester 114 and/or temporary traffic control system 111) is communicating and otherwise interacting with at least some of the elements shown in the remote server architecture 600. In an example, remote server architecture 600 can provide computation, software, data access, and storage services. In various examples, remote servers can deliver the services over a wide area network, such as the internet, using appropriate protocols. For instance, remote servers can deliver applications over a wide area network and they can be accessed through a web browser or any other computing component. Software or components shown or suggested in previous FIGS. as well as the corresponding data, can be stored on servers at a remote location. The computing resources in a remote server environment can be consolidated at a remote data center location or they can be dispersed. Remote server infrastructures can deliver services through shared data centers. Thus, the components and functions described herein can be provided from a remote server at a remote location using a remote server architecture. Alternatively, they can be provided from a conventional server, or they can be installed on client devices directly, or in other ways.

In the example shown in FIG. 6, some items are similar to those shown in previous FIGS. and they are similarly numbered. FIG. 6 specifically shows at least a portion of on-road traffic coordination controller 308 operating in conjunction with a data store 605, as well as other system(s) 606 that can be located at a remote server location or cloud 602. A portion of on-road traffic coordination controller 308 outside of cloud 602 illustratively remotely accesses systems inside of cloud 602. For example, FIG. 6 shows distributed portions of on-road traffic coordination controller 308 communicating from autonomous harvester 114 and/or traffic control device(s) 110/112 with the items in cloud 602 through cloud 602.

In one illustrative example, a portion of on-road traffic coordination controller 308 operates remotely (e.g., as described from a remote server location or cloud 602) as part of a farm management system that enables access to farm information and functions. Access to the farm management system is provided, for example, through a web-enabled device such as a tablet or phone. The farm management system is configured to support a variety of functions that enable management of a farming operation. One of these functions is illustratively is manually, semi-manually, or automatically activating and deactivating functions of autonomous harvester 114 and/or temporary traffic control system 111. Traffic signal changes and road crossings are illustratively manageable in this way through at least a portion of on-road traffic coordination controller 308 operating remotely in this manner. Any manual intervention is illustratively triggerable by a user onsite in the farming area or remotely from a location away from the farming area.

It will also be noted that the elements of previous FIGS., or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

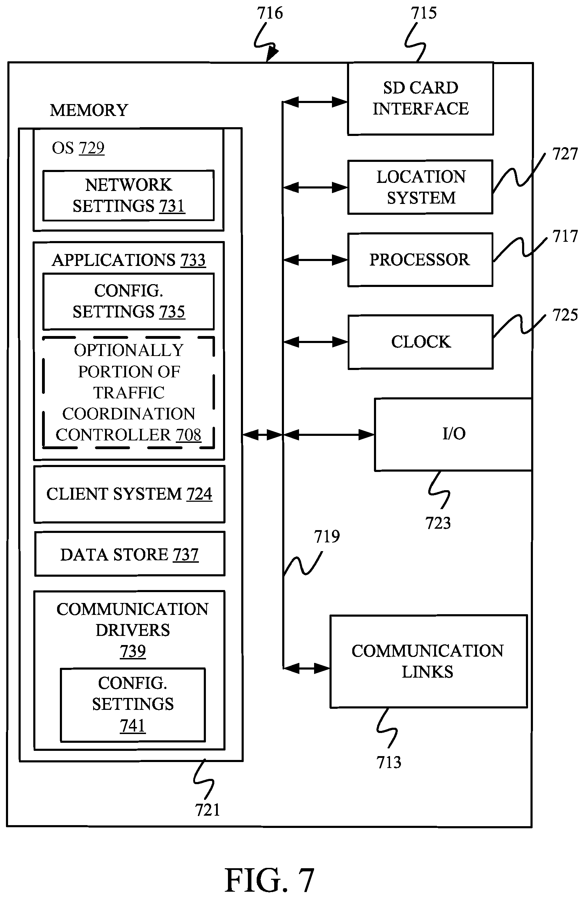

FIG. 7 is a simplified block diagram of one illustrative example of a handheld or mobile computing device that can be used as a user's or client's hand-held device 716, in which the present system (or parts of it) can be deployed. For instance, a mobile device can be deployed in the operator compartment of autonomous harvester 114 for use in generating, processing, or displaying autonomous control functionality or controls. Hand-held device 716 illustratively runs some components shown in previous FIGS., interacts with them, or both. In the hand-held device 716, a communications link 713 is provided that allows the hand-held device to communicate with other computing devices and under some examples provides a channel for receiving information automatically, such as by scanning. Examples of communications links 713 include allowing communication though one or more communication protocols, such as wireless services used to provide cellular access to a network, as well as protocols that provide local wireless connections to networks.

In other examples, applications can be received on a removable Secure Digital (SD) card that is connected to an SD card interface 715. SD card interface 715 and communication links 713 communicate with a processor 717 along a bus 719 that is also connected to memory 721 and input/output (I/O) components 723, as well as clock 725 and location system 727.

I/O components 723, in one example, are provided to facilitate input and output operations. I/O components 723 for various examples of the hand-held device 716 can include input components such as buttons, touch sensors, optical sensors, microphones, touch screens, proximity sensors, accelerometers, orientation sensors, and output components such as a display device, a speaker, and or a printer port. Other I/O components 723 can be used as well.

Clock 725 illustratively comprises a real time clock component that outputs a time and date. It can also, illustratively, provide timing functions for processor 717.

Location system 727 illustratively includes a component that outputs a current geographical location of hand-held device 716. This can include, for instance, a global positioning system (GPS) receiver, a Long-Range Navigation (LORAN) system, a dead reckoning system, a cellular triangulation system, or other positioning system. Location system 727 can also include, for example, mapping software or navigation software that generates desired maps, navigation routes and other geographic functions.

Memory 721 stores operating system 729, network settings 731, applications 733, application configuration settings 735, a portion or whole of traffic coordination controller 708, a client system 724, data store 737, communication drivers 739, and communication configuration settings 741. Memory 721 can include all types of tangible volatile and non-volatile computer-readable memory devices. Memory 721 can also include computer storage media (described below). Memory 721 stores computer readable instructions that, when executed by processor 717, cause the processor to perform computer-implemented steps or functions according to the instructions. Other components can activate processor 717 to facilitate their functionality as well.

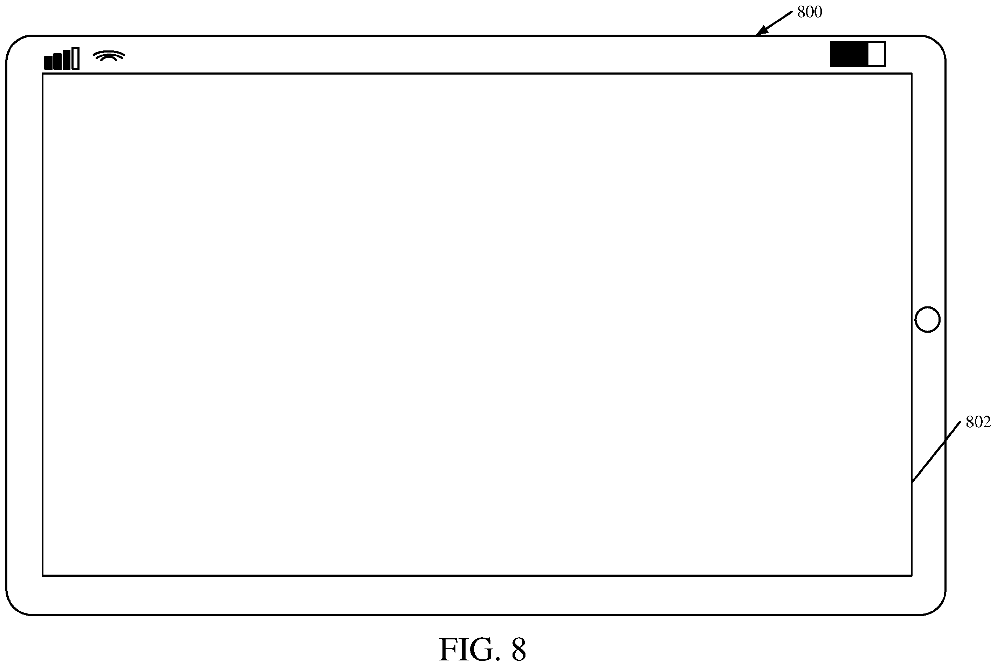

FIG. 8 shows one example in which hand-held device 716 is a tablet computer 800. In FIG. 8, tablet computer 800 is shown with user interface display screen 802. User interface display screen 802 can be a touch screen or a pen-enabled interface that receives inputs from a pen or stylus. Tablet computer 800 can also use an on-screen virtual keyboard. Of course, a tablet computer 800 might also be attached to a keyboard or other user input device through a suitable attachment mechanism, such as a wireless link or Universal Serial Bus (USB) port, for instance. Tablet computer 800 can also illustratively receive voice inputs as well.

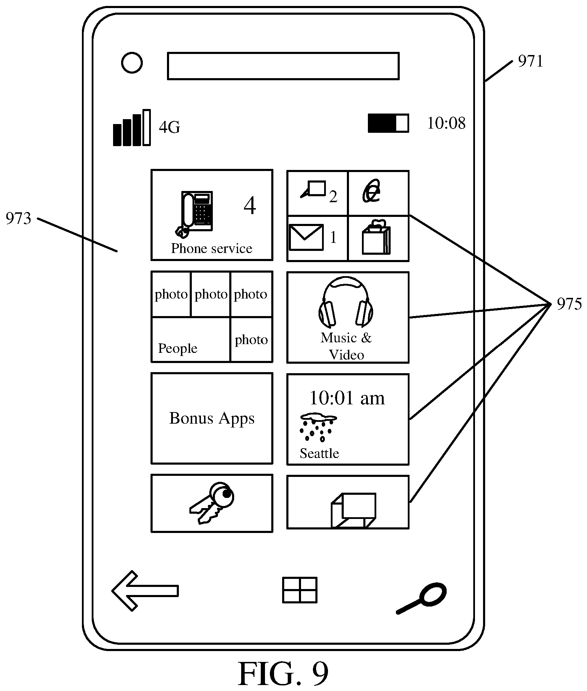

FIG. 9 shows that the hand-held device 716 can be a smart phone 971. Smart phone 971 has a touch sensitive display 973 that displays icons or tiles or other user input mechanisms 975. User input mechanisms 975 can be used by a user to run applications, make calls, perform data transfer operations, etc. Smartphone 971 is built on a mobile operating system and offers more advanced computing capability and connectivity than a feature phone.

Note that other forms of the hand-held device 716 are possible.

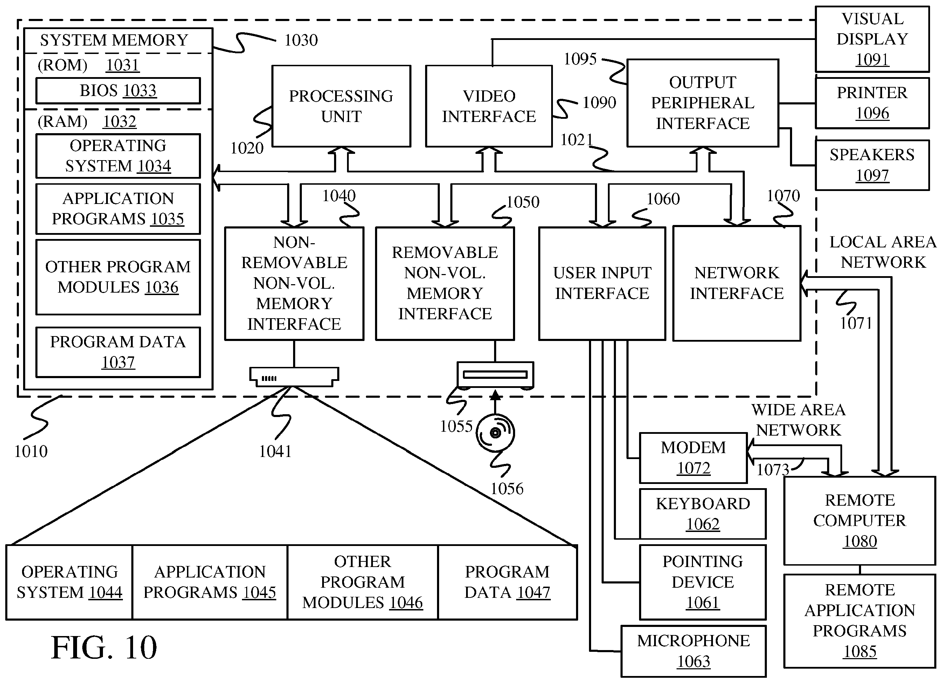

FIG. 10 is one example of a computing environment in which elements of previous FIGS., or parts of it, (for example) can be deployed. With reference to FIG. 10, an example system for implementing some examples or embodiments, include a computing device in the form of a computer 1010 programmed to operate as described above. Components of computer 1010 may include, but are not limited to, a processing unit 1020, a system memory 1030, and a system bus 1021 that couples various system components, including the system memory to the processing unit 1020. The system bus 1021 may be any of several types of bus structures including a memory bus or memory controller, a peripheral bus, and a local bus using various bus architectures. Memory and programs described with respect to previous FIGS. can be deployed in corresponding portions of FIG. 10.

Computer 1010 typically includes a variety of computer readable media. Computer readable media can be any available media that can be accessed by computer 1010 and includes both volatile and nonvolatile media, removable and non-removable media. By way of example, and not limitation, computer readable media may comprise computer storage media and communication media. Computer storage media is different from and does not include, a modulated data signal or carrier wave. It includes hardware storage media, including both volatile and nonvolatile, removable and non-removable media implemented in any method or technology for storage of information such as computer readable instructions, data structures, program modules, or other data. Computer storage media includes, but is not limited to, random access memory (RAM), read only memory (ROM), Electrically Erasable Programmable ROM (EEPROM), flash memory or other memory technology, compact disc (CD)-ROM, digital versatile disks (DVD) or other optical disk storage, magnetic cassettes, magnetic tape, magnetic disk storage or other magnetic storage devices, or any other medium which can be used to store the desired information and which can be accessed by computer 1010. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 1030 includes computer storage media in the form of volatile and/or nonvolatile memory, such as read only memory (ROM) 1031 and random access memory (RAM) 1032. A basic input/output system (BIOS) 1033, containing the basic routines that help to transfer information between elements within computer 1010, such as during start-up, is typically stored in ROM 1031. RAM 1032 typically contains data and/or program modules that are immediately accessible to and/or presently being operated on by processing unit 1020. By way of example, and not limitation, FIG. 10 illustrates operating system 1034, application programs 1035, other program modules 1036, and program data 1037.

The computer 1010 may also include other removable/non-removable volatile/nonvolatile computer storage media. By way of example only, FIG. 10 illustrates a hard disk drive 1041 that reads from or writes to non-removable, nonvolatile magnetic media, an optical disk drive 1055, and a nonvolatile optical disk 1056. The hard disk drive 1041 is typically connected to the system bus 1021 through a non-removable memory interface, such as non-removable memory interface 1040, and optical disk drive 1055 are typically connected to the system bus 1021 by a removable memory interface, such as removable non-volatile memory interface 1050.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media are discussed above and illustrated in FIG. 10, provide storage of computer readable instructions, data structures, program modules, and other data for the computer 1010. In FIG. 10, for example, hard disk drive 1041 is illustrated as storing operating system 1044, application programs 1045, other program modules 1046, and program data 1047. Note that these components can either be the same as or different from operating system 1034, application programs 1035, other program modules 1036, and program data 1037.

A user may enter commands and information into computer 1010 through input devices such as a keyboard 1062, a microphone 1063, and a pointing device 1061, such as a mouse, trackball, or touchpad. Other input devices (not shown) may include a joystick, game pad, satellite dish, scanner, or the like. These and other input devices are often connected to the processing unit 1020 through a user input interface 1060 that is coupled to the system bus, but may be connected by other interface and bus structures. A visual display 1091 or another type of display device is also connected to the system bus 1021 via an interface, such as a video interface 1090. In addition to the monitor, computers may include other peripheral output devices such as speakers 1097 and printer 1096, which may be connected through an output peripheral interface 1095.

The computer 1010 is operated in a networked environment using logical connections (such as a controller area network - CAN, local area network - LAN, or wide area network WAN) to one or more remote computers, such as a remote computer 1080.

When used in a LAN networking environment, the computer 1010 is connected to the LAN 1071 through a network interface or adapter 1070. When used in a WAN networking environment, the computer 1010 typically includes a modem 1072 or other means for establishing communications over the WAN 1073, such as the Internet. Program modules may be stored in a remote memory storage device in a networked environment. FIG. 10 illustrates, for example, that remote application programs 1085 can reside on remote computer 1080.

It should also be noted that the different examples described herein can be combined in different ways. That is, parts of one or more examples can be combined with parts of one or more other examples. All of this is contemplated herein.

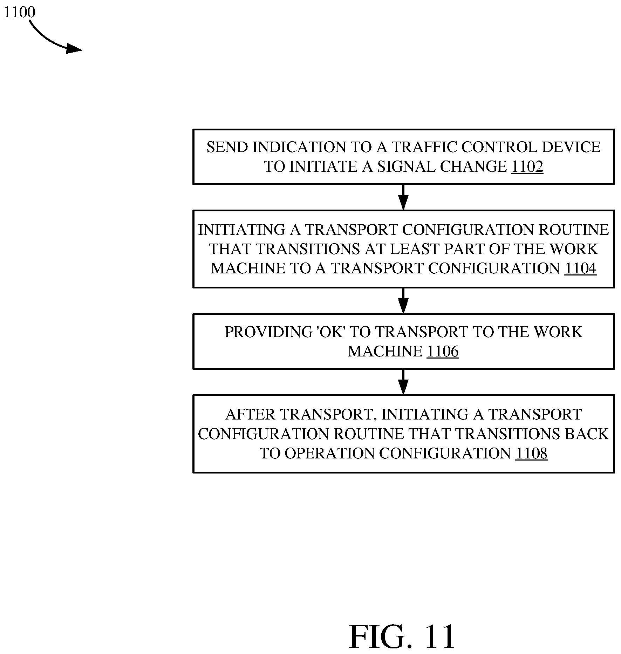

FIG. 11 is a process flow diagram demonstrating an example of functions associated with a transport configuration conversion controller (e.g., 398 in FIG. 3). In one example, the process flow of FIG. 11 is a method 1100 for facilitating movement of a work machine across a road from a first work location to a second work location. In accordance with block 1102, an indication is sent to a traffic control device that is illustratively a component of a temporary traffic control system (e.g., 111 in FIG. 1). The indication noted in block 1102 illustratively is an indication to cause the traffic control device to initiate a signal change. In accordance with block 1104, a transport reconfiguration routine is illustratively initiated to transition at least part of the work machine from an operation configuration to a transport configuration. In accordance with block 1106, an indication to the autonomous work machine signals that it is okay for the autonomous work machine to travel across the road from the first work location to the second work location. According to block 1108, after the work machine is in the second work location, a transport reconfiguration routine is initiated to transition at least part of the work machine from the transport configuration to an operation configuration.

In one example, the initiation of the transport reconfiguration routine that transitions at least a portion of the work machine to the transport configuration is timed to occur after sending the indication to the traffic control device. In another example, though, the initiation of the transport reconfiguration routine that transitions at least a portion of the work machine to the transport configuration is timed to occur before sending the indication to the traffic control device. The preferable timing will vary depending on the preferences and requirements of a given implementation. In one example, an autonomous sensor drive system (e.g., 310 in FIG. 3) is utilized to move the work machine across the road from the first work location to the second work location.

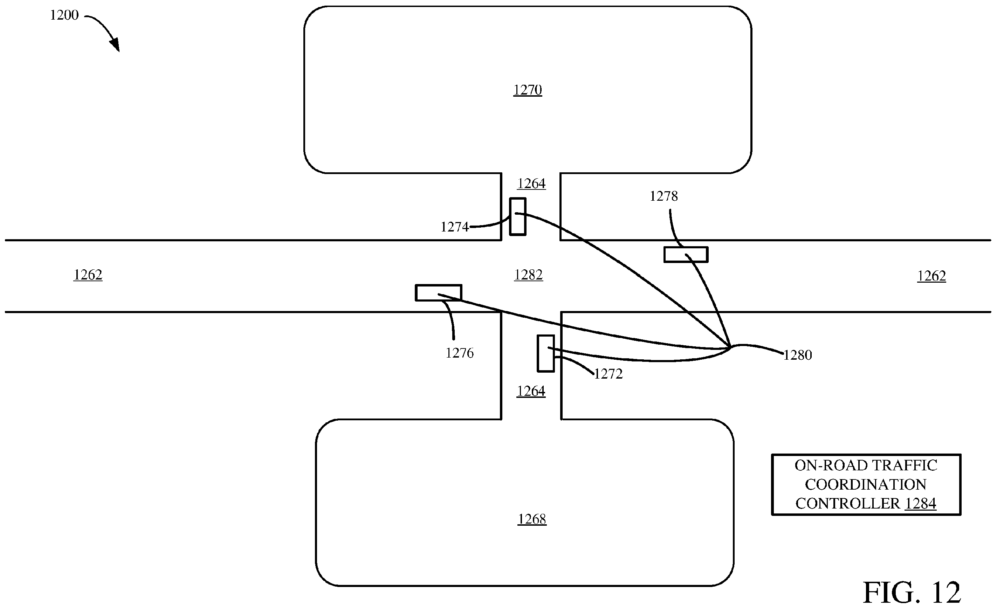

FIG. 12 is a schematic representation of a worksite 1200. Worksite 1200 is illustratively (though is not limited to being) a portion of a mining worksite. Components in FIG. 12 that are similarly configured and have the same or similar numbering when compared to previous Figures are assumed to have the same or similar functionality. A temporary traffic control system 1280 includes traffic control devices 1272, 1274, 1276, and 1278. The temporary traffic control system 1280 is illustratively similar to the temporary traffic control system 111 described in an agricultural context in relation to FIG. 1, but this time includes four instead of two traffic control devices. An on-road traffic coordination controller 1284 (illustratively at least similar to on-road traffic coordination controller 308 in FIG. 3) is programmatically configured to control the temporary traffic control system 1280 so as to facilitate dynamic management of cross-traffic at an intersection 1282 by controlling signals communicated by the traffic control devices 1272, 1274, 1276, and 1278.

A first contributor to the cross-traffic at intersection 1282 is illustratively a first set of automated, semi-automated, or manually operated work machines (not shown in FIG. 12 and illustratively but not limited to being excavators) moving along road 1264 back and forth between work areas 1268 and 1270 (and therefore back and forth through intersection 1282). A second contributor to cross-traffic at intersection 1282 is illustratively a second set of automated, semi-automated, or manually operated work machines (not shown in FIG. 12 and illustratively but not limited to being one or more rock trucks) moving back and forth along a road 1262 (and therefore back and forth through intersection 1282). Dynamic management of traffic at intersection 1282 utilizing the temporary traffic control system 1280 illustratively ensures that traffic contributors from both roads 1262 and 1264 are able to operate efficiently and effectively by minimizing and managing conflict and prioritization at intersection 1282.

The on-road traffic coordination controller 1284 is illustratively configured to manage access to intersection 1282 by programmatically receiving and evaluating a variety of variables that are then factored into signals triggered for presentation by the traffic control devices 1272, 1274, 1276, and 1278 included in the temporary traffic control system 1280. Of course, fewer or more traffic control devices can be included in a given implementation of the temporary traffic control system 1280, as access to intersection 1282 can be signaled with more or fewer traffic control devices. A precise number and placement of traffic control devices will vary depending on a variety of potential factors including how soon ahead of intersection 1282 it is desired to present a signal. The setup of four traffic control devices, 1272, 1274, 1276, and 1278, as shown in FIG. 12, includes a signal for work vehicles approaching intersection 1082 from all possible directions.

In one example, the variables programmatically considered within the logic of the on-road traffic coordination controller 1284 when determining how to manage intersection 1282 are at least some variables provided by the work machines themselves. In another example, variables are also or alternatively sourced from environmental sensors (e.g., sensors integrated into one or more of traffic control devices 1272, 1274, 1276, or 1278). In another example, variables are sourced from external information feeds, such as a weather forecast information server. In another example, other variables are sourced from external devices such as one or more unmanned aerial vehicles (UAVs) programmed to survey worksite 1260. These are only examples, not by limitation, of sources of variables programmatically accounted for in the logic of the on-road traffic coordination controller 1284.

In one example, the load status of one or more work machines is a variable programmatically accounted for in the logic of the on-road traffic coordination controller 1284. For example, the controller in one example is configured to prioritize fully loaded haul trucks over empty ones when determining an order of access to intersection 1282, ensuring that high-value payloads reach their destinations without unnecessary delays. In another example, the speed of approaching machines is a variable configured to programmatically influence intersection 1282 prioritization.

In one example, remaining fuel or battery levels are programmatically accounted for in the logic of the on-road traffic coordination controller 1284. For instance, if a work vehicle approaching the intersection is low on fuel or charge, it is illustratively given higher priority in order to minimize the risk of it becoming inoperable in a critical location. Additionally, current or forecasted weather conditions (such as data indicative of rain, fog, high winds, etc) is illustratively factored into intersection 1282 prioritization. Adverse weather may necessitate slower traffic flow or prioritization of vehicles that are less affected by such conditions. In one example, operational urgency is another variable given weight in the logic of the on-road traffic coordination controller 1284. For example, machines involved in time-sensitive tasks, such as concrete mixers delivering material with limited workable timeframes are illustratively given higher priority.

In still another example, external devices like UAVs or pole-mounted cameras are configured to contribute data for incorporation into the decision-making logic of on-road traffic coordination controller 1284. For example, UAVs or poles equipped with cameras or LIDAR sensors illustratively provide an aerial perspective of traffic conditions around intersection 1082, helping to identify bottlenecks or anticipate congestion. UAVs or pole-mounted cameras in some examples also or alternatively provide data indicative of road surface conditions, such as the presence of debris, mud, or ice, which illustratively influences optimal access to intersection 1282. In another example, a logic component of the on-road traffic coordination controller 1284 is configured to prioritize access to intersection 1282 based at least in part on scheduled tasks or worksite priorities, which illustratively includes deadlines for material delivery or the need to clear the intersection for oversized equipment at specific times. Time of day is another addressable factor, as traffic patterns and operational demands often vary between peak and off-peak periods.

By programmatically weighting and integrating these and potentially other diverse variables, the on-road traffic coordination controller 1284 ensures that the temporary traffic control system 1280 dynamically manages access to intersection 1282 in a way that is responsive to real-time conditions, operational priorities, preferences, requirements, etc. This capability enhances the overall efficiency and adaptability of the temporary traffic control system 1280, making it suitable for complex and rapidly changing worksite environments.

While the worksite 1260 shown in FIG. 12 is a mining worksite, it could just as easily be another type of work environment. Similar concepts are more broadly applicable to a wide range of other worksites. In construction sites, for example, heavy machinery such as bulldozers, cranes, and dump trucks often share access routes with supply vehicles delivering materials. On-road traffic coordination controller 1284 is illustratively configured programmatically to utilize temporary traffic control system 1280 to prioritize access to intersection 1282 for critical vehicles to ensure the coordinated and ideal operation of machinery in areas with complex traffic patterns.

Forestry operations provide another example where a temporary traffic control system 1280 is deployed. Logging trucks and forestry equipment, such as skidders and forwarders, frequently operate on shared paths. On-road traffic coordination controller 1284 is illustratively configured to prioritize access to intersection 1282, such as for logging trucks transporting cut timber, to minimize delays at processing facilities, while ensuring that forestry machinery can operate efficiently within designated work zones. Similarly, in large agricultural fields, tractors, harvesters, and transport vehicles carrying crops to storage or processing areas will sometimes navigate shared paths. The on-road traffic coordination controller 1284 in one example manages the temporary traffic control system 1280 and thereby manages access to an intersection 1282, for example giving priority to vehicles based on factors such as load status, operational urgency, or weather conditions, etc.

Industrial complexes, including manufacturing or processing plants, represent yet another environment where it is advantageous for an on-road traffic coordination controller 1284 to utilize temporary traffic control system 1280 to manage access to an intersection 1282. On these sites, internal transport vehicles such as forklifts and delivery trucks often need to navigate shared intersections. Ports and shipping yards, where vehicles such as autonomous cargo handlers, cranes, and container trucks operate, also will benefit. In one example, these systems dynamically coordinate cross-traffic between loading docks, container yards, and access roads, ensuring that high-priority cargo movements are given precedence. Similarly, in airports, ground support vehicles such as baggage carts, fuel trucks, and maintenance vehicles often cross active taxiways or service areas. In one example, a temporary traffic control system 1280 is deployed to prioritize critical vehicles, such as fuel trucks servicing departing flights, while also managing access for other support vehicles.

Road maintenance and construction zones present additional use cases for the described temporary traffic control system 1280. In such environments, work vehicles such as pavers, rollers, and dump trucks frequently need to interact with public traffic or other construction vehicles. In one example, the temporary traffic control system 1280 is set up to manage these interactions dynamically, allowing controlled access for essential vehicles while minimizing disruption to public traffic flow. In urban municipal operations, similar principles can be applied to coordinate vehicles like street sweepers, utility trucks, and garbage collection vehicles, ensuring efficient operation even in areas with pedestrian traffic or public vehicle interactions.

These examples underscore the versatility of the temporary traffic control system 1280. Whether deployed in construction, forestry, agriculture, industrial complexes, ports, airports, road maintenance zones, municipal operations, energy projects, or temporary installations, the system is adaptable to diverse environments and operational needs. The system enhances efficiency and coordination across a broad spectrum of industries by dynamically managing cross-traffic and prioritizing vehicles based on real-time variables.

In one example, a system for coordinating access to a portion of a road by a plurality of work machines includes a traffic control device (e.g., any one of 1272 through 1278 in FIG. 12) that is a component of a temporary traffic control system (e.g., 1280 in FIG. 12). The traffic control device illustratively includes a signaling component for signaling to one or more of the work machines. An on-road traffic coordination controller (e.g., 1284 in FIG. 12) illustratively identifies a first variable associated with a first work machine in the plurality, identifies a second variable associated with a second work machine in the plurality, and programmatically determines a change to the signaling component based at least in part on a comparison of the first and second variables. An indication of the change in signaling is provided to the traffic control device so as to cause a change in signaling provided to one or more of the plurality of work machines. In one example, the first and or second variables include the location of the first or second work machine, the speed of the first or second work machine, the load status of the first or second work machine, a load type of the first or second work machine, information derived from a camera or motion detection system pertaining to the first or second work machine, a fuel level of the first or second work machine, data derived from a sensor on an unmanned aerial vehicle pertaining to the first or second work machine, data derived from a sensor that is attached to one or more of the traffic control devices pertaining to the first or second machine, etc. In another example, variables are collected for more than two work machines and factored into the programmatic logic of which of the more than two work machines will get which signal impacts their access to the portion of the road.

In one example, a work machine includes a wireless communication component (e.g., 302 in FIG. 3, though notably work machine may or may not be autonomous and may or may not be a harvester) over which a variable associated with the work machine is communicated to an on-road traffic coordination controller (e.g., 1284 in FIG. 12). The variable is illustratively factored into a selection of a signal for a traffic control device (e.g., any of 1272 through 1278 in FIG. 12) that is a component of temporary traffic control system (1280 in FIG. 12). The signal illustratively prioritizes access by the work machine over another work machine to a portion of a road. In one example, the signal prioritizes access to the portion of the road based on a comparison by the on-road traffic coordination controller of the variable received from the work machine to another variable received from the "another" work machine. In one example, the variable includes the location of the work machine and/or a payload of the work machine, etc. In one example, the on-road traffic coordination controller is further configured to factor data from a sensor into the selection of the signal to the work machine.

In one example, a method for coordinating access to a portion of a road by a plurality of work machines includes receiving an instruction to change a signal to one or more of the work machines. The instruction is illustratively received from an on-road traffic coordination controller (e.g., 1284 in FIG. 12). The instruction is illustratively derived based at least in part on a prioritization to the portion of the road to a first work machine in the plurality over a second work machine in the plurality based at least in part on a programmatic evaluation of a variable received from each of the first and second work machines. In one example, the instruction to change the signal is an instruction to signal a change in speed. In another example, the instruction to change the signal is an instruction to signal an indication of a vehicle restriction. In other examples, the prioritization to the portion of the road is based at least in part on a time-of-day variable and/or a type of vehicle variable.

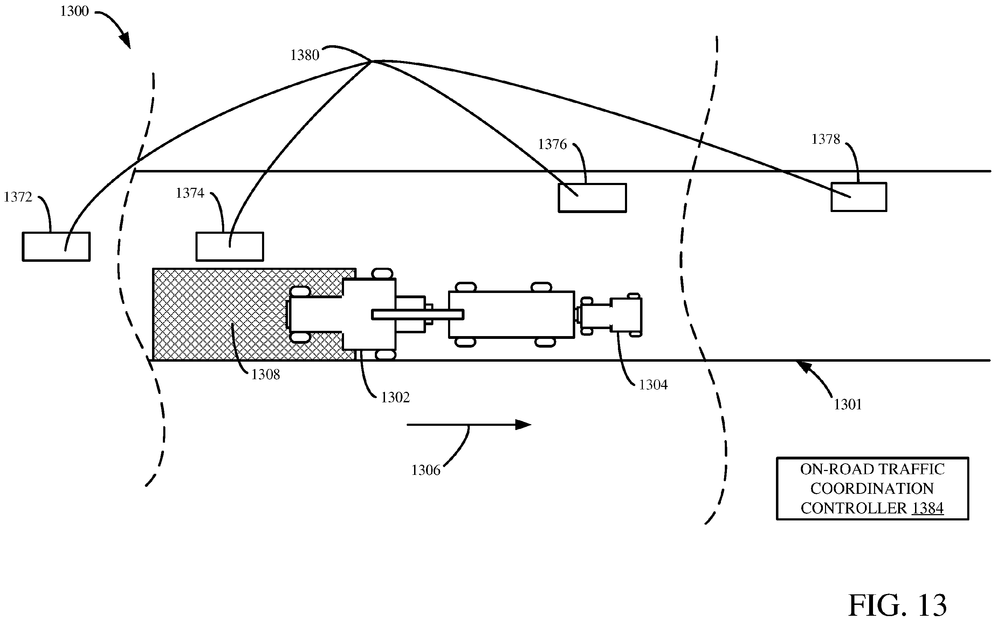

FIG. 13 is a schematic representation of a construction operation (i.e., a portion of a road grinding/asphalting operation) on a road construction worksite 1300. Components in FIG. 13 that are similarly configured and have the same or similar numbering when compared to previous Figures are assumed to have the same or similar functionality. While other work machines and vehicles will sometimes be operating within the road construction worksite 1300, for the purpose of simplification, only a grinder 1302 is shown removing pavement from road 1301 and depositing it into a dump truck 1304. Grinder 1302 and dump truck 1304 are illustratively moving along road 1301 in the direction of an arrow 1306, such that a pavement area 1308 has already been ground on the right-hand side of the road, behind grinder 1302.

Also included in the road construction worksite 1300 is a temporary traffic control system 1380 that includes a series of traffic control devices 1372, 1374, 1376, and 1378. It should also be noted that illustrative break lines are shown in road 1301 to indicate that traffic control devices 1378 and 1372 are actually positioned further ahead and behind grinder 1302 and dump truck 1304 than is shown in FIG. 13. Unlike previously described stationary configurations, traffic control devices 1372, 1374, 1376, and 1378 are each illustratively mounted so as to move along with grinder 1302 and dump truck 1304 as they advance forward along road 1301. To enable this forward movement, traffic control devices 1372 through 1378 are illustratively mounted to road construction equipment or vehicles, including but not limited to the possibility of being attached to grinder 1302 and/or dump truck 1304 themselves. In other examples, one or more of traffic control devices 1372 through 1378 are mounted on vehicles or equipment that is separate from grinder 1302 and dump truck 1304, which includes, in some instances, an autonomously operated vehicle/equipment, a semi-autonomous operated vehicle/equipment, or a manually operated vehicle/equipment.

An on-road traffic coordination controller 1384 (illustratively similar in nature and deployment to on-road traffic coordination controller 1284 in FIG. 12 and 308 in FIG. 3) is programmatically configured to coordinate and manage the movement of the traffic control devices 1372 through 1378, as well as the coordination of nearby work vehicles and all other traffic on road 1301. In one example, traffic control devices 1376 and 1378 are positioned in front of grinder 1302 and dump truck 1304. Traffic control devices 1376 and 1378 are illustratively equipped with signals that are managed by on-road traffic coordination controller 1384 so as to manage incoming traffic (illustratively including any or all work vehicles and machines and general open road traffic) and to create a controlled zone ahead of where grinder 1302 is operating. Similarly, traffic control devices 1372 and 1374 are positioned behind grinder 1302 and dump truck 1304. Devices 1372 and 1374 are illustratively equipped with signals that are managed by on-road traffic coordination controller 1384 so as to manage traffic passing through and leaving road construction worksite 1300. In one example, traffic control devices 1372 through 1378 are operated in a coordinated manner by on-road traffic coordination controller 1384 such work vehicles, machines, and traffic take turns using a shared portion of road 1301. In some examples, traffic control devices 1372 through 1378 are equipped with signals for communicating a reduced speed limit or instruction, a lane closure, an alternate route or otherwise as necessary to coordinate movement around where grinder 1302 is working.

The on-road traffic coordination controller 1384 dynamically provides commands or instructions to adjust the positioning and signaling of the traffic control devices 1376 through 1378, with programmatic consideration being given to data supplied by the grinder 1302, by dump truck 1304, by sensors deployed in worksite 1300, by camera deployed in road construction worksite 1300, by data or images collected by an external device such as a UAV, by other vehicles, etc. In one example, the on-road traffic coordination controller 1384 receives and gives programmatic consideration in its generation of commands or instructions to data indicating a speed at which grinder 1302 is moving down road 1301, operational status (e.g., grinding, asphalting, idle, etc.), a projected path of continued work operations, etc. Based on this and/or other information, the on-road traffic controller illustratively updates commands or instructions to reposition any or all of traffic control devices 1372 through 1378 so as to maintain optimal traffic flow.

Traffic control devices 1372 through 1378 are illustratively programmed to display different signals in different programmatically identified circumstances. In one example, traffic control device 1372, located further upstream, displays a warning such as "Road Work Ahead" or "Prepare to Stop," while traffic control device 1374, positioned closer to the machine, displays a reduced speed limit or a lane-specific instruction. Traffic control devices 1376 and 1378, which are also downstream, in one example signal "Do Not Enter" or direct support or other vehicles to a designated access point, etc. Exactly what is signaled and when can illustratively be varied from one worksite to the next, depending at least upon applicable preferences, requirements, regulations, etc.

The on-road traffic coordination controller 1384 is illustratively further configured to monitor and manage the movement and scheduling of support vehicles. In one example, the on-road traffic coordination controller is programmed to prioritize support vehicle access, such as access for dump trucks that need to collect ground material from the grinder 1302 or utility vehicles delivering fresh asphalt to an asphalting machine, etc. The controller programmatically schedules and signals as necessary to facilitate the movement of support vehicles in a way that imposes a minimal disruption to other traffic, etc.

Environmental or other factors, such as but not limited to weather conditions, time of day, material expiration timelines, and road surface quality, are illustratively integrated into the decision-making logic of the on-road traffic coordination controller 1384 in terms of how traffic control devices 1372 through 1378 are managed. For example, during periods of rain or poor visibility, the on-road traffic controller illustratively increases the distance between one or more of the traffic control devices 1372 through 1378 and the area where work is being conducted (i.e., where grinder 1302 is operating) while also potentially reducing displayed speed limits, etc. In a scenario where a single-lane road is being worked on, the temporary traffic control system 1380, in one example, is programmatically configured to manage alternating traffic flow. For example, at least traffic control devices 1372 and 1374 illustratively are illustratively controlled by the on-road traffic coordination controller 1384 to alternate between signaling "Stop" and "Proceed" to allow vehicles from opposing directions to share an available lane. The dynamic nature of the temporary traffic control system 1380 enables seamless integration with mobile worksite operations in various scenarios. While FIG. 13 depicts a road grinding scenario, the described system is equally applicable to other worksite operations, such as paving, snow removal, sweeping, or mowing. The described ability to dynamically reposition traffic control devices and coordinate traffic flow makes the temporary traffic control system 1380 suitable for a wide range of applications across various industries.

Concepts described herein are not limited to road construction type work machines. From higher level perspective, in one example, a system is provided to coordinate traffic around a mobile worksite involving a work machine that is gradually moving forward. A first traffic control device (e.g., any one of traffic control devices 1372 through 1378 in FIG. 13) that is a component of a temporary traffic control system (e.g., 1380 in FIG. 13), the first traffic control device is mounted so as to gradually move forward along with a work machine (e.g., 1302 in FIG. 13). An on-road traffic coordination controller (e.g., 1384 in FIG. 3) dynamically adjusts a signal presented by the first traffic control device to coordinate a movement of vehicles proximate to the mobile worksite. In one example, dynamically adjusting the signal presented by the first traffic control device includes dynamically adjusting the signal based at least in part on the operational data of the work machine. Examples of such operational data include, but are not limited to, the location of the work machine, on/off status of the work machine, status of being in or out of state of actively performing work, and information indicative of the speed of movement of the work machine.

In one example, the system includes a second traffic control device (e.g., another of the traffic control devices 1372 through 1378 in FIG. 13) mounted so as to gradually move forward along with the work machine. In this example, the on-road traffic coordination controller (e.g., 1384 in FIG. 3) dynamically adjusts a signal presented by the second traffic control device to coordinate the movement of vehicles proximate to the mobile worksite. In one example, the first and second traffic control devices are configured to signal a pattern of alternating lane usage for vehicles traveling in opposite directions on a single-lane road proximate to the mobile worksite. In one example, at least one of the signals presented is an indication of speed or a vehicle type-specific restriction. In one example, the on-road traffic coordination controller integrates consideration of data received from an unmanned aerial vehicle into dynamically adjusting the signal presented by the first traffic control device. In another example, the on-road traffic coordination controller integrates consideration of data received from a motion detection sensor into dynamically adjusting the signal presented by the first traffic control device. In another example, the on-road traffic coordination controller integrates consideration of data received from a sensor attached to the first traffic control device into dynamically adjusting the signal presented by the first traffic control device.

In some examples, an on-road traffic coordination controller (e.g., 1384 in FIG. 3) is configured to facilitate the management of traffic around a mobile worksite involving a work machine (e.g., 1302 in FIG. 13) that is gradually moving forward. A logic component (e.g., a computer device mechanism programed with computer implemented instructions) is illustratively included in or with the on-road traffic coordination controller. The logic component is configured to communicate with a traffic control device (e.g., one of 1372 through 1378 in FIG. 13) mounted so as to gradually move forward along with the work machine. The logic component is also illustratively configured to programmatically identify a signal for the traffic control device to manage traffic flow in proximity to the work machine. The logic component in one example, dynamically adjusts the traffic control device to present the signal. In one example, programmatically identifying the signal includes programmatically identifying the signal so as to discourage vehicles from passing the work machine in one direction but not in the opposite direction. In another example, programmatically identifying the signal further comprises programmatically identifying the signal as part of a pattern of alternating lane usage for vehicles traveling in opposite directions on a single-lane road proximate to the mobile worksite.

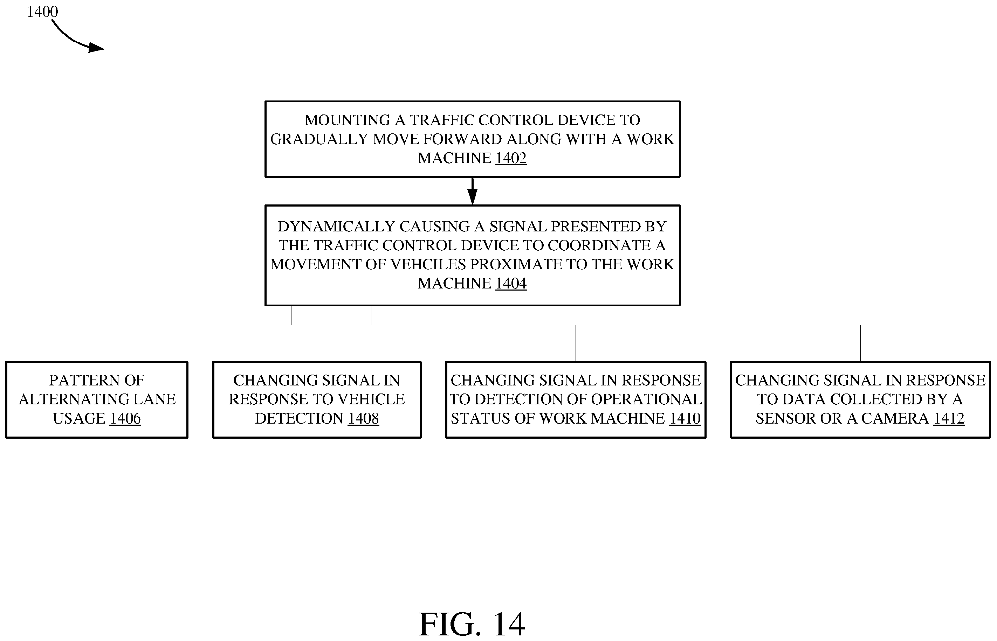

FIG. 14 is a process flow diagram demonstrating an example of functions associated with a method 1400 for coordinating traffic around a mobile work site involving a work machine (e.g., 1302 in FIG. 13) that is gradually moving forward. In accordance with block 1402, a traffic control device is mounted so that the traffic control device is gradually moving forward along with the work machine. In accordance with block 1404, a signal presented by the traffic control device is dynamically changed to coordinate the movement of vehicles proximate to the mobile worksite.

In accordance with block 1406, dynamically changing the signal means dynamically changing the signal as part of a pattern of alternating lane usage for vehicles traveling in opposite directions on a single-lane road proximate to the mobile worksite. In accordance with block 1408, dynamically changing the signal further comprises changing the signal in response to the detection of a vehicle in an area around the mobile worksite. In accordance with block 1410, dynamically changing the signal further includes changing the signal in response to the detection of a change in the operational status of the work machine. In accordance with block 1412, dynamically changing the signal includes changing the signal in response to data collected by a sensor or a camera.

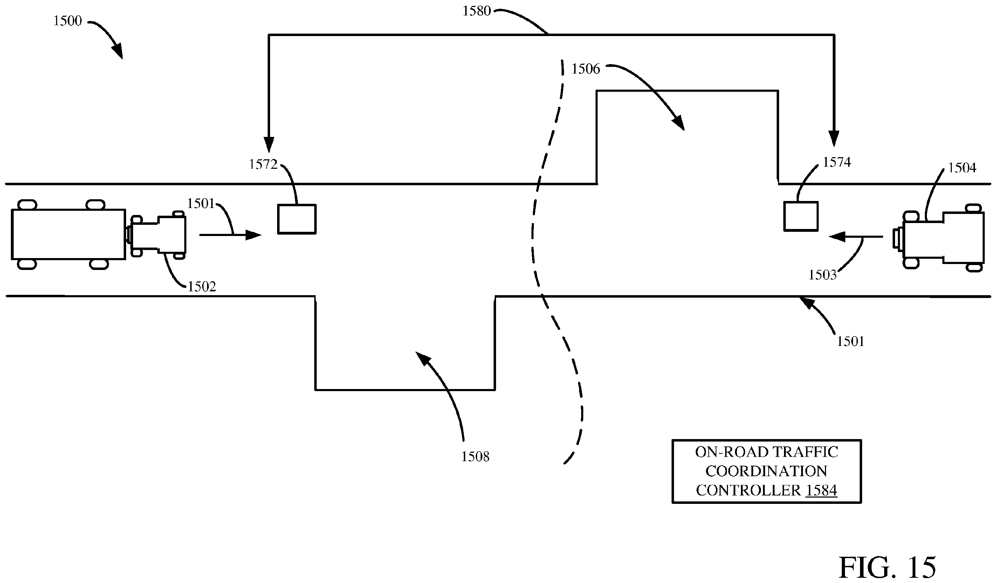

FIG. 15 is a schematic representation of a portion of a forestry/logging operation on a logging worksite 1500. Components in FIG. 15 that are similarly configured and have the same or similar numbering when compared to previous FIGS. Are assumed to have the same or similar functionality. A temporary traffic control system 1580 includes traffic control devices 1572 and 1574 that are illustratively utilized to dynamically manage access to a narrow forestry road 1501. Narrow forestry road1501 is illustratively characterized by sections wide enough for two-way traffic (e.g., passing pullovers 1506 and 1508) and sections narrow enough to require alternating one-way traffic. To prevent congestion, an on-road traffic coordination controller 1584 (illustratively similar to and similarly deployed as compared to on-road traffic coordination controllers 308 in FIG. 3, 1284 in FIG. 12, and 1384 in FIG. 13) coordinates signals displayed by traffic control devices 1572 and 1574 and thereby manages movements of vehicles on narrow forestry road 1501. The traffic illustratively includes truck 1502, which is headed in a direction indicated by narrow forestry road 1501, toward truck 1504, which is headed in the opposite direction indicated by arrow 1503.

Traffic control devices 1572 and 1574 are positioned at opposite ends of narrow forestry road 1501, which is narrow. Traffic control devices 1572 and 1574 are illustratively equipped with dynamic signaling capabilities managed by the on-road traffic coordination controller 1584. For example, traffic control device 1572 signals traffic entering the depicted area of narrow forestry road 1501 from one direction, while traffic control device 1574 signals traffic entering from the opposite direction. By coordinating these signals, on-road traffic coordination controller 1584 illustratively is configured to manage vehicles traveling in opposite directions such that they do not enter a narrow section simultaneously, thereby avoiding congestion.

In one example, the on-road traffic coordination controller 1584 receives data from various sources, such as location updates from logging trucks operating in the area (e.g., trucks 1502 and 1504), sensors or cameras installed along the narrow forestry road 1501, or external monitoring devices (e.g., UAVs or pole-mounted cameras). In some examples, received information includes the current location of vehicles, vehicle speeds, load status of logging trucks, and information about the distance to the nearest passing pullover, such as passing pullovers 1506 and 1508). In one example, based at least in part on the information made available, on-road traffic coordination controller 1584 programmatically determines which vehicle (e.g., which of trucks 1502 and 1504) is granted access to narrow forestry road 1501 and which vehicle should pull off. Traffic control devices 1572 and 1574 are then controlled in order to communicate signals accordingly.

In one example, on-road traffic coordination controller 1584 is programmatically configured to prioritize loaded logging trucks over empty ones when determining when to signal to proceed and when to signal to pull over. For instance, a fully loaded truck traveling toward a logging depot is illustratively granted immediate access, while an empty truck returning to the forest is illustratively required to wait at a pullout area, such as passing pullover 1506 or 1508. This prioritization illustratively ensures efficient movement of high-value loads without unnecessary delays. This is but one example of prioritization for which the logic of the on-road traffic coordination controller 1584 can be programmatically configured.

In another example, environmental factors, such as weather conditions and time of day, are also or alternatively integrated into the decision-making logic of the on-road traffic coordination controller 1584. For example, in poor visibility conditions (e.g., heavy rain or fog), the time allocated for a vehicle to move through a section of narrow forestry road 1501 is illustratively increased. Similarly, the management of traffic control devices 1572 and 1574 is illustratively adjusted automatically to account for slippery road conditions, ensuring that vehicles have sufficient stopping distance, etc. These are additional examples of prioritization for which the logic of the on-road traffic controller 1584 can be programmatically configured.

In one example, Traffic control devices 1572 and 1574 are configured to provide a "Stop" signal for vehicles approaching from one direction and a "Proceed" signal for vehicles traveling in the opposite direction. In one example, either signal is equipped to communicate an instruction to pull over, wait at the next passing pullover, etc. In another example, on-r0ad traffic coordination controller 1584 is configured to coordinate with external devices, such as UAVs equipped with cameras or Light Detection and Ranging (LIDAR) sensors, to monitor traffic flow and identify potential bottlenecks. For example, if a UAV detects multiple trucks waiting at passing pullover 1508, the on-road traffic coordination controller 1584 illustratively is equipped programmatically to recognize this fact and adjust signals at traffic control devices 1572 and 1574 to prioritize clearing the backup. Similarly, if a pole-mounted camera detects debris or fallen trees on narrow forestry road 1501, the on-road traffic coordination controller 1584 is illustratively equipped programmatically to signal a temporary closure and notify nearby operators of the obstruction.

In one example, in addition to managing logging trucks, the temporary traffic control system 1580 can also accommodate non-logging traffic, such as service vehicles or personnel transport. The on-road traffic coordination controller 1584 illustratively assigns priority based, for example, on the operational urgency of such vehicles. For instance, a service vehicle responding to equipment failure in the forest may be given immediate access, whereas another vehicle may be forced to stop, etc.

While FIG. 15 illustrates a forestry/logging use case, the described system is equally applicable to other scenarios involving narrow or constrained roads, such as construction sites, mining operations, or mountain passes. The ability of on-road traffic coordination controller 1584 to dynamically manage alternating traffic flow and prioritize vehicle access based on real-time conditions makes the temporary traffic control system 1280 adaptable to a wide range of industries and environments.

In one example, a system is provided for controlling access to a one-way road (e.g., narrow forestry road 1501 in FIG. 15) shared by a first work machine (e.g., 1502 in FIG. 15) and a second work machine (e.g., 1504 in FIG. 15) that are traveling in opposite directions. A traffic control device (e.g., 1572 in FIG. 5) is a component of a temporary traffic control system (e.g., 1580 in FIG. 5). The traffic control device is illustratively configured to present signals to the first work machine. An on-road traffic coordination controller (e.g., 1584 in FIG. 15) receives data indicative of the status of the first and second work machines. The on-road traffic coordination controller identifies, based at least in part on the data, that the first work machine should receive a signal to give way and let the second work machine have first priority on the one-way road. The on-road traffic coordination controller transmits an instruction to the first traffic control device to present the signal to give way and let the second work machine have first priority on the one-way road.

In one example, the data indicative of the status of the first and the second work machines includes a location (or load status, etc.) of the first and second work machines. In another example, identifying that the first work machine should receive the signal to give way and let the second work machine have the first priority to the one-way road includes identifying based at least in part on a comparison of load status, load status, etc. of the first and second work machines. In other examples, information programmatically factored into identifying includes any or all of the speed of either or both work machines, an estimated time to reach a designated pullover location, information from a motion detection sensor, data from a sensor carried by one of the work machines, data from a sensor attached to the traffic control device(s), information or data collected by cameras, information collected by a sensor on an unmanned aerial vehicle, etc.

In one example, the traffic control device (e.g., 1572 in FIG. 15) manages access to a road shared by a first work machine (e.g., 1502 in FIG. 5) and a second work machine (1504 in FIG. 15) that is traveling in opposite directions. The traffic control device is illustratively a component of a temporary traffic control system (e.g., 1580 in FIG. 5). The traffic control device, in one example, includes a signal display configured to present a signal to the first work machine. The traffic control device also illustratively includes a communication interface that receives an instruction from an on-road traffic coordination controller (e.g., 1584 in FIG. 15) to present the signal to the first work machine. The signal is illustratively a signal to give way and let the second work machine have priority access to the road. The instruction is, in one example, based at least in part on data indicative of the status of the first and second work machines.

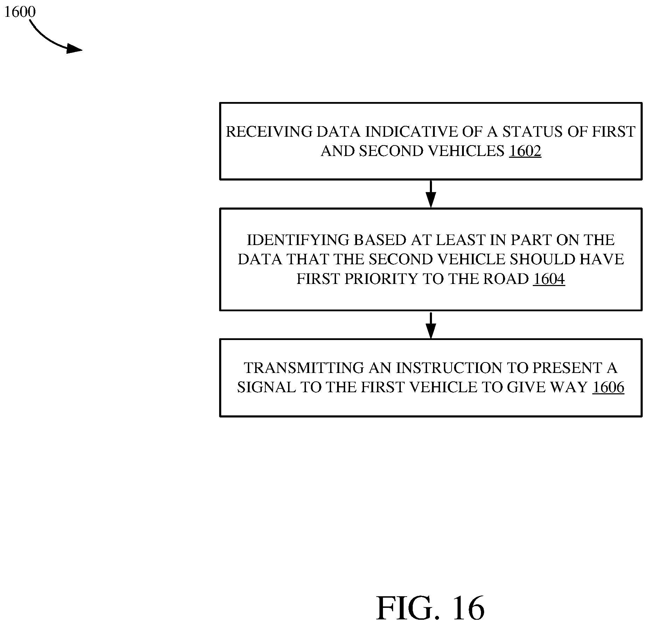

FIG. 16 is a process flow diagram demonstrating one example of method 1600 for controlling access to a road (e.g., narrow forestry road 1501 in FIG. 15) shared by a first work machine (e.g., 1502 in FIG. 15) and a second work machine (e.g., 1504 in FIG. 15) traveling in opposite directions. In accordance with block 1602, data is received and indicates the status of the first and second work machines. In accordance with block 1604, based at least in part on the received data, it is identified that the first work machine should receive a signal to give away and let the second work machine have a first priority to the road. In accordance with block 1606, an instruction is transmitted to a traffic control device to present a signal to the first work machine indicating that it gives away and let a signal to the first work machine indicating that it gives away and let the second work machine have a first priority to the road.

Temporary traffic control systems, such as temporary traffic control system 111 (FIG. 1), temporary traffic control system 1280 (FIG. 12), temporary traffic control system 1380 (FIG. 13), temporary traffic control system 1280, or any similar system are in some examples configured to signal using a mechanism other than a traditional red/yellow/green light style signal. For instance, in some examples, a traffic control device, such as traffic control devices 110 and 112 (FIG. 1), traffic control devices 1272 through 1278 (FIG. 12), traffic control devices 1372 through 1378 (FIG. 13), traffic control devices 1272 and 1274 (FIG. 12), or any similar traffic control device is replaced or supplemented with a dynamic billboard or electronic display capable of generating and displaying text-based instructions, speed limits, access restrictions, route advisories, or hazard warnings. In one example, the signals presented are still automatically selected based on variables such as readiness, location, predicted and preferred movements of work machines and other vehicles, as well as operational priorities and/or safety considerations, etc.

[00104] The on-road traffic coordination controller 308 (FIG. 3) and/or 1284 (FIG. 12) and/or 1384 (FIG. 13), 1284 (FIG. 12), or similar controller is illustratively configured to adjudicate access (e.g., to roads, to intersections, to etc.) by weighting data from various sources, including sensors, cameras, unmanned aerial vehicles (UAVs), and data feeds from work machines or other vehicles. In one example of this, the on-road traffic coordination controller calculates an estimated time required for a work machine, such as an autonomous harvester 114, to traverse an intersection or complete the navigation of a route. This calculation illustratively incorporates factors such as machine load, acceleration and braking capabilities, and terrain conditions (e.g., steep inclines or uneven surfaces). Similarly, the system, in some examples, estimates the amount of time needed for pedestrian or non-work vehicle traffic to cross a road or intersection. These assessments illustratively support the on-road traffic coordination controller in making adjustments to the traffic control devices to ensure efficient traffic management.

In some examples, traffic control devices controlled by one of the on-road traffic coordination controllers are configured to dynamically display instructions, such as adjusted speed limits, lifted access restrictions, or specific route advisories, based on a programmatic assessment of operational needs. For instance, access to a road or intersection or etc. is in one example restricted except under predefined conditions, such as allowing temporary access to an airport taxiway for a tug or permitting a loader to use a quarry road otherwise closed to certain vehicles. Scenarios are illustratively managed by dynamically presenting signals and/or information.

Path planning is another capability integrated into the on-road traffic coordination controllers. For example, referring to FIG. 12, a calculation is illustratively made in terms of expected paths and arrival times of vehicles, such as haul trucks and loaders traveling along roads 1262 and 1264, respectively. Using predictive modeling, signals are dynamically changed accordingly to optimize, for example, the use of intersection 1082, reducing potential conflicts and maintaining a smooth flow of traffic. This approach ensures that traffic signals adapt to real-time and predicted conditions, improving operational efficiency.

In another example, traffic is dynamically prioritized by the on-road traffic coordination controllers based on the operational status and needs of vehicles. Referring to FIG. 12, for example, on-road traffic coordination controller 1284 illustratively prioritizes loaded haul trucks over empty ones at intersection 1082, ensuring that payloads are delivered without unnecessary delays. Similarly, vehicles engaged in time-sensitive tasks, such as concrete mixers or autonomous harvesters nearing operational deadlines, illustratively are given priority access through dynamic signal adjustments, etc.

In another example, speed limits displayed by traffic control devices are dynamically adjusted to enhance efficiency or other operational goals. During an intense worksite operation, speed limits are illustratively reduced dynamically to protect personnel and equipment. Once the intensity has resolved, the speed limits are illustratively restored to normal levels. Such adjustments allow on-road traffic coordination controllers to balance operational considerations with throughput demands.

In one example, the on-road traffic coordination controllers are configured to employ predictive analytics. Through programmatic analysis of historic traffic patterns, machine movements, and environmental conditions, potential for traffic congestion is illustratively anticipated and signals preemptively adjusted. For example, referring to FIG. 12, multiple trucks are illustratively predicted to converge at intersection 1282, and therefore, the signals are adapted to minimize delays and conflicts, thereby optimizing traffic flow.

In addition to managing traffic, the on-road traffic coordination controllers illustratively are configured to provide hazard warnings and notifications to improve situational awareness. Traffic control devices, in some examples, display alerts about hazardous road conditions, such as mud, ice, or debris, detected by sensors or UAVs. These warnings ensure operators are able to respond to changing conditions promptly, reducing the risk of accidents.

The functions of on-road traffic coordination controllers are illustratively adaptable to a wide range of environments, including construction sites, quarries, airports, and industrial complexes. For example, at ports, priority is illustratively given to container trucks over auxiliary vehicles during high-demand periods. Similarly, ground support equipment can be granted temporary access to active taxiways in airports. By dynamically adapting to real-time data and operational needs, efficiency is promoted across diverse applications.

In one example, a system for coordinating the transport of a work machine (e.g., autonomous harvester 114 in FIG. 1, 1302 and 1304 in FIG. 13, 1502 and 504 in FIG. 15, etc.) between a first work location and a second work location is provided. The system illustratively includes a traffic control device (e.g., 110, 112 in FIG. 1, 1272 through 1278 in FIG. 12, 1372 through 1378 in FIG. 13, 1572 and 1574 in FIG. 15, etc.) that is a component of a temporary traffic control system (e.g., 111, 1280, 1380, 1580, etc.), the traffic control device including a signaling component configured to provide a signal to a vehicle on a road, the vehicle being separate and distinct from the work machine. An on-road traffic coordination controller (e.g., 308, 1284, 1384, 1584, etc.) illustratively programmatically determines that the work machine should have access to the road to travel from the first work location to the second work location. The on-road controller illustratively responds to the identification by automatically activating the signaling component so as to signal the vehicle. The signal to the vehicle is illustratively a signal to execute an action. In some examples, the signal to the vehicle is a speed restriction, an access restriction based on vehicle type, a caution, etc. In one example, programmatically determining that the work machine should have access to the road to travel from the first work location to the second work location is based at least in part on a programmatic comparison of an attribute of the work machine with an attribute of the vehicle. In another example, the determining is based at least in part on the consideration of data from a sensor or camera or motion detection device, etc. In some examples, the sensor or camera or motion detection device is attached to the traffic control device or is carried by an unmanned aerial vehicle.

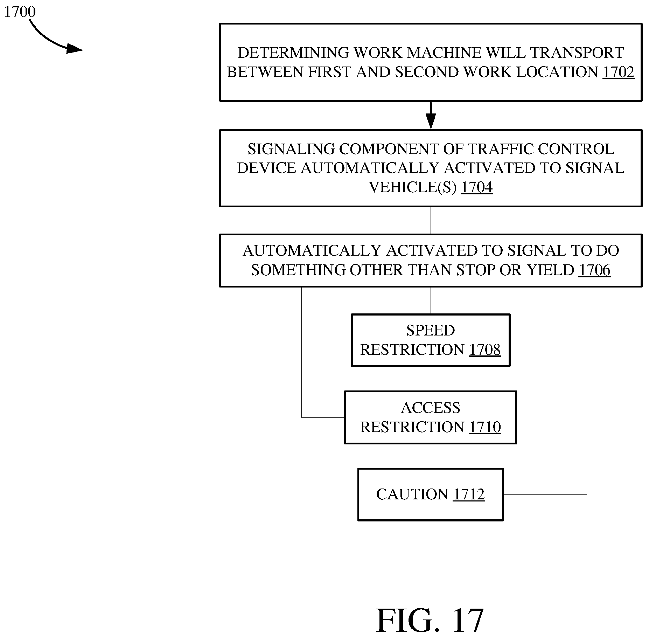

FIG. 17 is a process flow diagram demonstrating one example of a method 1700 for coordinating transport of a work machine (e.g., autonomous harvester 114 in FIG. 1, 1302 and 1304 in FIG. 13, 1502 and 504 in FIG. 15, etc.) between a first work location and a second work location. In accordance with block 1702, a determination is made (based on a received signal or otherwise) that the work will be transported between the first work location and the second work location. In accordance with block 1704, in response to the determination, a signaling component (e.g., components 110, 112 in FIG. 1, 1272 through 1278 in FIG. 12, 1372 through 1378 in FIG. 13, 1572 and 1574 in FIG. 15, etc.) is automatically activated. According to block 1706, it is automatically activated to signal to do something other than stopping or yielding. In accordance with block 1708, the signal is a speed restriction. In accordance with block 1710, the signal is an access restriction, such as a vehicle type restriction. In accordance with block 1712, the signal is a caution.

In one example, a work machine (e.g., autonomous harvester 114 in FIG. 1, 1302 and 1304 in FIG. 13, 1502 and 504 in FIG. 15, etc.) includes a wireless communication component (e.g., 302 in FIG. 3, etc.) over which a variable associated with the work machine is communicated to an on-road traffic coordination controller (e.g., 308, 1284, 1384, 1584, etc.). The variable is illustratively factored into a selection of a signal from a traffic control device (e.g., 110, 112 in FIG. 1, 1272 through 1278 in FIG. 12, 1372 through 1378 in FIG. 13, 1572 and 1574 in FIG. 15, etc.) that is a component of temporary traffic control system (e.g., 111, 1280, 1380, 1580, etc.). The signal illustratively signals an instruction to do something other than stopping or yielding (e.g., a speed restriction, a restriction based on vehicle type, a caution, etc.). In one example, the signal reflects a prioritization by the on-road traffic coordination controller of access for the work machine to a portion of a road. In another example, the prioritization is based at least in part, on a comparison by the on-road traffic coordination controller of the variable to a different variable received from another work machine.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A system for coordinating an autonomous transport of an autonomous work machine (114) between first (102) and second (104) off-road work locations that are separated by a road (101), **characterised in that** the system comprises:
a temporary traffic control system (111) that includes a traffic control device (110, 112) as a component, the traffic control device (110, 112) including a signaling component configured to provide (406) a signal to a vehicle on the road (111); and
an on-road traffic coordination controller (308) configured to:
receive (406) from the autonomous work machine (114) an indication of an intention for the autonomous work machine (114) to travel on the road (111);
respond to the indication by activating (406) the signaling component so as to signal the vehicle to stop; and
after activating the signaling component, provide (410) an indication to the autonomous work machine (114) that permission is granted to cross the road from the first off-road work location (102) to the second off-road work location (104).

2. The system of claim 1, wherein the on-road traffic coordination controller is further configured to provide the indication to the autonomous work machine that permission is granted to cross the road from the first off-road work location to the second off-road work location based at least in part on a programmatic determination that an area of the road between the first off-road work location and the second off-road work location is clear of vehicles.

3. The system of claim 2, wherein the programmatic determination that the area of the road between the first off-road location and the second off-road location is clear of vehicles is based at least in part on a measurement of a passing of time after a vehicle has been detected by a sensor.

4. The system of any preceding claim, further comprising a sensor configured to support a programmatic determination that an area of the road between the first off-road work area and the second off-road work area is clear of vehicles, and wherein the on-road traffic coordination controller (308) is further configured to receive the programmatic determination that the area of the road between the first off-road work area and the second off-road work area is free of vehicles.

5. The system of claim 4 wherein the sensor is carried on an unmanned aerial vehicle.

6. The system of claim 4, wherein the sensor is attached to the traffic control device.

7. The system of any one of claims 4 to 6, wherein the sensor is a motion detection device.

8. The system of any one of claims 4 to 6, wherein the sensor is a camera.

9. A method for controlling an autonomous work machine (114) so as to coordinate an autonomous transport of the autonomous work machine (114) between a first off-road work location (102) and a second off-road work location (104) that are separated by a road (111), **characterised in that** the method comprises:
receiving (406) from the autonomous work machine (114) an indication of an intention for the autonomous work machine (114) to travel on the road (111);
sending (406) an instruction to a traffic control device (110, 112) that is a component of a temporary traffic control system (111), wherein the instruction causes the traffic control device to initiate a signal change so as to signal the vehicle to stop; and
providing (410) an indication to the autonomous work machine (114) that permission is granted to cross from the first off-road work location (102) to the second off-road work location (104).

10. The method of claim 9, further comprising receiving an indication that the road is clear of vehicles in an area of the road between the first off-road work area and the second off-road work area.

11. The method of claim 10, wherein the indication that the road is clear is an indication that is programmatically generated based at least in part on a measurement of a passing of time after a vehicle has been detected by a sensor.

12. The method of claim 10 or 11, wherein the sensor is carried on an unmanned aerial vehicle.

13. The method of claim 10 or 11, wherein the sensor is attached to the traffic control device.

14. The method of any one of claims 10 to 13, wherein the sensor is a motion detection device.

15. The method of any one of claims 10 to 13, wherein the sensor is a camera.

## Patentansprüche

1. System zur Koordination eines autonomen Verkehrs einer autonomen Arbeitsmaschine (114) zwischen einem ersten (102) und einem zweiten (104) Geländearbeitsort, die durch eine Straße (101) voneinander getrennt sind, **dadurch gekennzeichnet, dass** das System Folgendes umfasst:
ein zeitweiliges Verkehrsregelungssystem (111), das eine Verkehrsregelungsvorrichtung (110, 112) als eine Komponente beinhaltet, wobei die Verkehrsregelungsvorrichtung (110, 112) eine signalgebende Komponente beinhaltet, die zum Geben (406) eines Signals an ein Fahrzeug auf der Straße (111) konfiguriert ist; und
eine Straßenverkehrskoordinationssteuerung (308), konfiguriert zum:
Empfangen (406), von der autonomen Arbeitsmaschine (114), einer Anzeige einer Absicht für das Fahren der autonomen Arbeitsmaschine (114) auf der Straße (111);
Reagieren auf die Anzeige durch Aktivieren (406) der signalgebenden Komponente, um den Fahrzeug ein Signal zum Anhalten zu geben; und
nach dem Aktivieren der signalgebenden Komponente Geben (410) einer Anzeige an die autonome Arbeitsmaschine (114), dass die Erlaubnis erteilt wird, die Straße vom ersten Geländearbeitsort (102) zum zweiten Geländearbeitsort (104) zu überqueren.

2. System nach Anspruch 1, wobei die Straßenverkehrskoordinationssteuerung ferner konfiguriert ist zum Geben der Anzeige an die autonome Arbeitsmaschine, dass die Erlaubnis erteilt wird, die Straße vom ersten Geländearbeitsort zum zweiten Geländearbeitsort zu überqueren, zumindest teilweise auf Basis einer programmatischen Bestimmung, dass ein Bereich der Straße zwischen dem ersten Geländearbeitsort und dem zweiten Geländearbeitsort frei von Fahrzeugen ist.

3. System nach Anspruch 2, wobei die programmatische Bestimmung, dass der Bereich der Straße zwischen dem ersten Geländearbeitsort und dem zweiten Geländearbeitsort frei von Fahrzeugen ist, zumindest teilweise auf Basis einer Messung eines Verstreichens einer Zeit, nachdem ein Fahrzeug von einem Sensor erfasst worden ist, erfolgt.

4. System nach einem der vorhergehenden Ansprüche, das ferner einen Sensor umfasst, der zum Unterstützen einer programmatischen Bestimmung konfiguriert ist, dass ein Bereich der Straße zwischen dem ersten Geländearbeitsbereich und dem zweiten Geländearbeitsbereich frei von Fahrzeugen ist, und wobei die Straßenverkehrskoordinationssteuerung (308) ferner zum Empfangen der programmatischen Bestimmung konfiguriert ist, dass der Bereich der Straße zwischen dem ersten Geländearbeitsbereich und dem zweiten Geländearbeitsbereich frei von Fahrzeugen ist.

5. System nach Anspruch 4, wobei der Sensor auf einem unbemannten Luftfahrzeug getragen wird.

6. System nach Anspruch 4, wobei der Sensor an der Verkehrsregelungsvorrichtung angebracht ist.

7. System nach einem der Ansprüche 4 bis 6, wobei der Sensor eine Bewegungserkennungsvorrichtung ist.

8. System nach einem der Ansprüche 4 bis 6, wobei der Sensor eine Kamera ist.

9. Verfahren zum Steuern einer autonomen Arbeitsmaschine (114), um einen autonomen Verkehr der autonomen Arbeitsmaschine (114) zwischen einem ersten Geländearbeitsort (102) und einem zweiten Geländearbeitsort (104), die durch eine Straße (111) voneinander getrennt sind, zu koordinieren, **dadurch gekennzeichnet, dass** das Verfahren Folgendes umfasst:
Empfangen (406), von der autonomen Arbeitsmaschine (114), einer Anzeige einer Absicht für das Fahren der autonomen Arbeitsmaschine (114) auf der Straße (111);
Senden (406) einer Anweisung an eine Verkehrsregelungsvorrichtung (110, 112), die eine Komponente eines zeitweiligen Verkehrsregelungssystems (111) ist, wobei die Anweisung die Verkehrsregelungsvorrichtung zum Einleiten einer Signaländerung veranlasst, um dem Fahrzeug ein Signal zum Anhalten zu geben; und
Geben (410) einer Anzeige an die autonome Arbeitsmaschine (114), dass die Erlaubnis erteilt wird, vom ersten Geländearbeitsort (102) zum zweiten Geländearbeitsort (104) zu fahren.

10. Verfahren nach Anspruch 9, das ferner das Empfangen einer Anzeige umfasst, dass die Straße in einem Bereich der Straße zwischen dem ersten Geländearbeitsbereich und dem zweiten Geländearbeitsbereich frei von Fahrzeugen ist.

11. Verfahren nach Anspruch 10, wobei die Anzeige, dass die Straße frei ist, eine Anzeige ist, die zumindest teilweise auf Basis einer Messung eines Verstreichens von Zeit, nachdem ein Fahrzeug von einem Sensor erfasst worden ist, programmatisch erzeugt wird.

12. Verfahren nach Anspruch 10 oder 11, wobei der Sensor auf einem unbemannten Luftfahrzeug getragen wird.

13. Verfahren nach Anspruch 10 oder 11, wobei der Sensor an der Verkehrsregelungsvorrichtung angebracht ist.

14. Verfahren nach einem der Ansprüche 10 bis 13, wobei der Sensor eine Bewegungserkennungsvorrichtung ist.

15. Verfahren nach einem der Ansprüche 10 bis 13, wobei der Sensor eine Kamera ist.

## Revendications

1. Système de coordination de transport autonome d'une machine de travail autonome (114) entre un premier (102) et un deuxième (104) emplacement de travail hors route qui sont séparés par une route (101), **caractérisé en ce que** le système comprend :
un système de contrôle de circulation temporaire (111) qui comprend un dispositif de contrôle de circulation (110, 112) en tant que composant, le dispositif de contrôle de circulation (110, 112) comprend un composant de signalisation configuré pour fournir (406) un signal à un véhicule sur la route (111) ; et
un contrôleur de coordination de circulation sur route (308) configuré pour :
recevoir (406) de la machine de travail autonome (114) une indication d'une intention de la machine de travail autonome (114) de se déplacer sur la route (111) ;
répondre à l'indication en activant (406) le composant de signalisation de manière à signaler au véhicule de s'arrêter ; et
après avoir activé le composant de signalisation, fournir (410) une indication à la machine de travail autonome (114) que la permission lui est accordée de traverser la route du premier emplacement de travail hors route (102) au deuxième emplacement de travail hors route (104).

2. Système selon la revendication 1, dans lequel le contrôleur de coordination de circulation sur route est configuré en outre pour fournir une indication à la machine de travail autonome que la permission lui est accordée de traverser la route du premier emplacement de travail hors route au deuxième emplacement de travail hors route sur la base en partie au moins d'une détermination programmatique qu'une zone de la route entre le premier emplacement de travail hors route et le deuxième emplacement de travail hors route est dégagée de véhicules.

3. Système selon la revendication 2, dans lequel la détermination programmatique que la zone de la route entre le premier emplacement hors route et le deuxième emplacement hors route est dégagée de véhicules est basée en partie au moins sur une mesure d'un passage de temps après qu'un véhicule a été détecté par un capteur.

4. Système selon l'une quelconque des revendications précédentes, comprenant en outre un capteur configuré pour permettre une détermination programmatique qu'une zone de la route entre la première zone de travail hors route et la deuxième zone de travail hors route est dégagée de véhicules, et dans lequel le contrôleur de coordination de circulation sur route (308) est configuré en outre pour recevoir la détermination programmatique que la zone de la route entre la première zone de travail hors route et la deuxième zone de travail hors route est dégagée de véhicules.

5. Système selon la revendication 4, dans lequel le capteur est porté sur un véhicule aérien sans pilote.

6. Système selon la revendication 4, dans lequel le capteur est attaché au dispositif de contrôle de circulation.

7. Système selon l'une quelconque des revendications 4 à 6, dans lequel le capteur est un dispositif de détection de mouvement.

8. Système selon l'une quelconque des revendications 4 à 6, dans lequel le capteur est une caméra.

9. Procédé de contrôle d'une machine de travail autonome (114) de manière à coordonner le transport autonome de la machine de travail autonome (114) entre un premier emplacement de travail hors route (102) et un deuxième emplacement de travail hors route (104) qui sont séparés par une route (111), **caractérisé en ce que** le procédé comprend :
recevoir (406) de la machine de travail autonome (114) une indication d'une intention de la machine de travail autonome (114) de se déplacer sur la route (111) ;
envoyer (406) une instruction à un dispositif de contrôle de circulation (110, 112) qui est un composant d'un système de contrôle de circulation temporaire (111), dans lequel l'instruction fait que le dispositif de contrôle de circulation déclenche un changement de signal de manière à signaler au véhicule de s'arrêter ; et
fournir (410) une indication à la machine de travail autonome (114) que la permission lui est accordée de traverser du premier emplacement de travail hors route (102) au deuxième emplacement de travail hors route (104).

10. Procédé selon la revendication 9, comprenant en outre recevoir une indication que la route est dégagée de véhicules dans une zone de la route entre la première zone de travail hors route et la deuxième zone de travail hors route.

11. Procédé selon la revendication 10, dans lequel l'indication que la route est dégagée est une indication qui est générée de manière programmatique sur la base en partie au moins d'une mesure d'un passage de temps après qu'un véhicule a été détecté par un capteur.

12. Procédé selon la revendication 10 ou 11, dans lequel le capteur est porté sur un véhicule aérien sans pilote.

13. Procédé selon la revendication 10 ou 11, dans lequel le capteur est attaché au dispositif de contrôle de circulation.

14. Procédé selon l'une quelconque des revendications 10 à 13, dans lequel le capteur est un dispositif de détection de mouvement.

15. Procédé selon l'une quelconque des revendications 10 à 13, dans lequel le capteur est une caméra.
